# EUROPÄISCHE PATENTSCHRIFT

(11) **EP 2 359 451 B1**
(45) Veröffentlichungstag und Bekanntmachung des Hinweises auf die Patenterteilung: **01.01.2014**
(21) Anmeldenummer: 09765059.2
(22) Anmeldetag: 19.11.2009
(51) Int. Cl.: B60L 11/18, H02J 3/32

(54) **DEZENTRALE ENERGIEEFFIZIENZ DURCH AUTONOME, SELBSTORGANISIERENDE SYSTEME UNTER DER BERÜCKSICHTIGUNG VON HETEROGENEN ENERGIEQUELLEN**
DECENTRALIZED ENERGY EFFICIENCY THROUGH AUTONOMOUS, SELF-ORGANIZING SYSTEMS, TAKING INTO ACCOUNT HETEROGENEOUS ENERGY SOURCES
EFFICACITÉ ÉNERGÉTIQUE DÉCENTRALISÉE PAR LE BIAIS DE SYSTÈMES AUTONOMES A AUTO-ORGANISATION AVEC PRISE EN COMPTE DE SOURCES D'ÉNERGIE HÉTÉROGÈNES

(30) Priorität: 21.11.2008 DE 102008037574
(43) Veröffentlichungstag der Anmeldung: 24.08.2011
(73) Patentinhaber: EnBW Energie Baden-Württemberg AG, 76131 Karlsruhe (DE)
(72) Erfinder: ALBAYRAK, Sahin, 10587 Berlin (DE); MÜNCH, Wolfram, 76593 Gernsbach (DE); WALCH, Lars, 76307 Karlsbad (DE); NIEHAUS, Thorsten, 76185 Karlsruhe (DE); KESSLER, Alois, 75417 Mühlacker (DE); FREY, Hellmuth, 76227 Karlsruhe (DE)
(74) Vertreter: Meyer-Dulheuer, Karl-Hermann
(86) Internationale Anmeldenummer: PCT/EP2009/065472
(87) Internationale Veröffentlichungsnummer: WO 2010/057948

(56) Entgegenhaltungen:
- WO-A1-2006/132070
- WO-A1-2008/073453
- WO-A2-2007/065135
- WO-A2-2008/135043
- GB-A- 2 376 087
- US-A1- 2005 125 243
- US-A1- 2007 282 495
- US-B2- 7 120 520

## Beschreibung

Die Erfindung betrifft ein dezentrales System aus Energie-Verbrauchern und Energie-Quellen, deren Nutzung mittels eines Verfahrens überwacht, gesteuert und optimiert wird.

Aus der US-amerikanischen Patentschrift mit der Nr. 7,373,222 B1 sind bereits ein System und eine Verfahren bekannt, die das dynamische Energie-Management erleichtern und die Verwendung von Energie optimieren sollen. Das System besteht aus Energie-Verbrauchern, wie Maschinen, Pumpen, Förderbändern etc., welchen jeweils ein sogenannter Load-Controller zugeordnet ist, der den Energieverbrauch überwacht. So wie die Energie-Verbraucher sind auch die Load-Controller räumlich verteilt, stehen jedoch gleichwohl über ein Netzwerk miteinander und mit einem Master-Controller in Verbindung. Dieser erfasst den Gesamtverbrauch, stellt mit Hilfe der Load-Controller fest, welche Energie-Verbraucher nicht aktiv sind und legt in Bezug auf die Energiezuteilung die Priorität der einzelnen Energie-Verbraucher fest. Der Gesamtenergieverbrauch wird in Echtzeit mit einem maximal möglichen oder optimalen Verbrauch verglichen und bei Überschreitung dieses Wertes werden in Abhängigkeit der Prioritätsvorgaben Load-Controller angewiesen, die ihnen zugeordneten Energie-Verbraucher abzuschalten oder deren Energieverbrauch zu drosseln. Bei Unterschreitung des maximalen bzw. optimalen Verbrauchs werden Energie-Verbraucher entsprechend zugeschaltet. Die Funktionalität des Master-Controllers kann jedoch auch von einer Mehrzahl an Load-Controllern übernommen werden, welche zusammenarbeiten und durch intelligente Software-Agenten gesteuert werden können. Das System gemäß US 7,373,222 B1 bezieht seine Energie lediglich von einer Quelle, dem öffentlichen Stromnetz. Dabei wird versucht die Überschreitung eines vorgegebenen Energieverbrauchs zu vermeiden, wobei eine Anpassung des Energieverbrauchs im System an den vorgegebenen Maximalwert allein über die Steuerung der Energie-Verbraucher erfolgt, was situationsabhängig gezwungenermaßen zur Abschaltung bestimmter Energie-Verbraucher führt. Die Möglichkeiten in Bezug auf die Nutzung von alternativen Energie-Quellen, inklusive Energie-Speichern, werden nicht erkannt.

Die US-amerikanische Patentschrift mit der Bezeichnung US 7,274,975 B2 beschreibt ebenfalls Systeme und Verfahren zur Optimierung des Energieverbrauchs, verfolgt darüber hinaus jedoch auch das Ziel, diese mit einer optimierten Energieversorgung zu verbinden. Die Steuerung des Systems erfolgt durch einen sogenannten Controller (Computer und Software) mit der Zielvorgabe, die Energiekosten zu minimieren. Dazu werden erst die Grenzkosten für die verschiedenen ortsfesten Energie-Quellen (Solarzellen, Brennstoffzellen, Energie-Speichern oder dem öffentlichen Stromnetz etc.) bestimmt. Danach werden die Kapazitäten der einzelnen Energie-Quellen - mit Ausnahme des öffentlichen Stromnetzes - sowie der Energiebedarf im System ermittelt. Anschließend erfolgt eine dynamische Energieallokation in Abhängigkeit der Grenzkosten und Kapazitäten der einzelnen Energie-Quellen um den festgelegten Verbrauch mit minimalen Kosten zu decken. Darüber hinaus wird auch die Möglichkeit ins Auge gefasst, den Betrieb von bestimmten Energie-Verbrauchern in jene Zeitintervalle zu legen, in welchen die Energiekosten gering sind. Es werden also sowohl Energie-Verbrauch wie auch Energie-Versorgung gesteuert. Beim System gemäß US 7,274,975 B2 handelt es sich wiederum um ein bezüglich seiner Komponenten fixiertes System, welches darüber hinaus nicht dezentral sondern zentral organisiert ist, was die Skalierbarkeit beeinträchtigt.

Dokument WO 2008/073453 A1 zeigt ein System zur Integration von Elektrofahrzeugen in das öffentliche Stromnetz, das den Energieinhalt der elektrischen Energiespeicher in den Fahrzeugen nutzt, um die Last im öffentlichen Netz zu vergleichmäßigen.

Dokument WO 2007/065135 A2 offenbart eine hierarchische Struktur, welche im öffentlichen Stromnetz eine Vergleichmäßigung von Belastung und Erzeugung durch dezentralen Abgleich mit Hilfe von Softwareagenten erreicht.

Die Aufgabe der vorliegenden Erfindung besteht darin, ein lokales System und ein Verfahren zur Verfügung zu stellen, welche ein verteiltes, flexibles Energiemanagement ermöglichen. Die Zielsetzung besteht in einer Optimierung der Energienutzung und insbesondere in einer Glättung der Lastkurve beim Energieverbrauch. Weitere Aufgaben und Vorteile ergeben sich aus den nachfolgenden Ausführungen.

Die Aufgabe wird erfindungsgemäß durch ein System nach Anspruch 1 und ein Verfahren nach Anspruch 7 gelöst.

Vorzugsweise handelt es sich beim genannten System um ein lokales System zur Nutzung von mobilen Energie-Quellen, welches mindestens die folgenden Komponenten aufweist
- eine oder mehrere zentrale Management-Einheiten (SEA-ME) sowie eine oder mehrere weitere Management-Einheiten, wobei jede Management-Einheit vorzugsweise mindestens eine Prozessoreinheit, mindestens eine Speichereinheit und mindestens eine Kommunikationseinrichtung und/oder Datenschnittstelle aufweist, wobei es bevorzugt ist, dass das System eine SEA-ME aufweist,
- ein oder mehrere Energie-Controller, wobei die Energie-Controller Mittel zur Regelung und/oder Schaltung von Stromkreisen aufweisen, wobei jeder Energie-Controller über eine Datenschnittstelle mit mindestens einer Management-Einheit (SEC-ME) in Verbindung steht,
- ein oder mehrere Energie-Verbraucher V₁-V_{B} (B ∈ IN; B ≥ 1; mit der Bedeutung: B ist ein beliebiges Element (∈) der natürlichen Zahlen (IN) mit der Einschränkung dass B größer oder gleich eins ist. Entsprechendes gilt auch für alle weiteren solchen Angaben),
- eine oder mehrere Messeinrichtungen zur Messung des Energieverbrauchs der Energie-Verbraucher,
- eine oder mehrere mobile Energie-Quellen Q₁-Q_{K} (K ∈ IN; K ≥ 1), wobei jeder Energie-Quelle eine Management-Einheit (CA-ME) zugeordnet ist,
- Messeinrichtungen zur Messung der in den mobilen Energie-Quellen Q₁-Q_{K} gespeicherten Energiemengen E₁-E_{K} (K ∈ IN; K ≥ 1), wobei die Messeinrichtungen, die jeweils einer mobilen Energie-Quelle Q₁-Q_{K} zugeordnet sind über Datenschnittstellen direkt oder indirekt mit der jeweiligen CA-ME in Verbindung stehen,
- eine oder mehrere ortsfeste Stationen für den Anschluss der mobilen Energie-Quellen an ein systeminternes Energie-Netz, wobei jeder Station oder jeder Gruppe von Stationen eine Management-Einheiten (SA-ME) zugeordnet ist,
- eine oder mehrere Energieübertragungseinrichtungen, welche zusammen ein systeminternes Energie-Netz bilden, wobei zumindest die Energie-Verbraucher, die Stationen und die Energie-Controller über das systeminterne Energie-Netz miteinander in Verbindung stehen.

Bevorzugt stehen mehrere oder alle der Komponenten des oben genannten Systems (vorzugsweise mit Ausnahme der mobilen Energie-Quelle) über das systeminterne Energie-Netz miteinander in Verbindung, wobei es sich bei den Energieübertragungseinrichtungen, welche das systeminterne Energie-Netz bilden, vorzugsweise um Stromkabel handelt.

Der Energie-Controller kann die Form einer zentralen Schalteinheit haben oder aus einer Vielzahl verteilt angeordneter Schalter bestehen, welche vorzugsweise Schnittstellen und/oder Kommunikationseinrichtungen aufweisen. Ein Beispiel eines aus verteilt angeordneten Schaltern bestehenden Energie-Controllers wären zwei oder mehr Digitalstrom-Chips, welche mit Mitteln zur Regelung und/oder Schaltung von Stromkreisen ausgerüstet sind und denen ggf. Messeinrichtungen zur Messung des Energieflusses zugeordnet sind. Die einzelnen Teile eines solchen Energie-Controllers können beispielsweise direkt von der SEM-ME gesteuert werden. Ein aus einer Vielzahl von verteilt angeordneten Schaltern bestehender Energie-Controller vereinfacht die Skalierbarkeit des Systems, denn befinden sich die Schalter beispielsweise in den Energie-Verbrauchern selbst, so können diese ohne Änderung des systeminternen Energie-Netzes einfach angeschlossen werden.

Bei den Management-Einheiten handelt es sich vorzugsweise um Computer, wobei es bevorzugt ist, dass sich auf jeder Management-Einheit ein oder mehrere sogenannte Software-Agenten oder kurz "Agenten" befinden. Die Agenten stellen Computerprogramme dar, welche bestimmte Aufgaben im genannten System übernehmen bzw. gewisse Abläufe oder Verfahrensschritte steuern.

Wenn im Folgenden von Aufgaben oder Tätigkeiten der Agenten gesprochen wird, soll darunter jeweils auch die Aufgabe oder Tätigkeit der dem entsprechenden Agenten zugeordneten Management-Einheit verstanden werden.

Die vorzugsweise autonom handelnden Agenten sind jeweils speziell auf die Erledigung der ihnen zugedachten Aufgaben ausgelegt und bilden zusammen ein Multigagentensystem. Insbesondere wird auf vier Agenten Bezug genommen, nämlich auf den Smart-Energy-Agent (SEA), den Smart-Energy-Controller (SEC), den Station-Agent (SA) und den Car-Agent (CA), wobei es sich beim SEC zwar um ein Computerprogramm aber nicht notwendigerweise um einen intelligenten Agenten handeln muss. Der SEA ist der zentralen Management-Einheit (SEA-ME) zugeordnet, während der SEC sich auf der Management-Einheit des Energie-Controllers (SEC-ME) befindet. Die Management-Einheit der mobilen Energie-Quelle (CA-ME) enthält den CA und die Management-Einheit der Station (SA-ME) beherbergt den SA. Die Agenten übernehmen die wichtigsten Entscheidungsprozesse des verteilten Energiemanagement-Systems. Ihre Hauptaufgaben bestehen darin, Situationen zu überwachen, das Verhalten des Systems bzw. seiner Komponenten und dasjenige der Nutzer zu antizipieren und Optimierungen im Systemablauf durchzuführen. Ebenfalls müssen Fehler erkannt und entsprechend kommuniziert werden.

Bei der SEA-ME und der SEC-ME kann es sich um zwei verschiedene, über eine Datenschnittstelle miteinander in Verbindung stehende Management-Einheiten oder um dieselbe Management-Einheit handeln. Alternativ oder zusätzlich dazu kann es sich bei der SEA-ME und der SA-ME um zwei verschiedene über eine Datenschnittstelle miteinander in Verbindung stehende Management-Einheiten oder um dieseibe Management-Einheit handeln, wobei es bevorzugt ist, dass das System eine SEA-ME aufweist und/oder es sich zumindest bei der SEA-ME und SA-ME um zwei oder mehrere verschiedene Management-Einheiten handelt.

Im Normalfall weist das System eine SEA-ME auf. Natürlich können mehrere solche Systeme zu größeren Einheiten zusammengeschlossen werden. Die verschiedenen SEA-MEs kommunizieren dann miteinander und eine der SEA-MEs oder eine Gruppe von SEA-MEs oder alle SEA-MEs der Systeme gemeinsam übernehmen dann die Aufgabe der SEA-ME für die größere Einheit.

Das erfindungsgemäße System ermöglicht ein verteiltes Energiemanagement, wobei sich die Agenten bzw. die ihnen zugeordneten Management-Einheiten vorzugsweise räumlich getrennt in drei Hauptdomänen befinden: Heimbereich, Station und mobile Energie-Quelle. Beim Heimbereich handelt es sich um die Summe aller Systemkomponenten außer den Stationen und den mobilen Energie-Quellen. Bei den mobilen Energie-Quellen kann es sich beispielsweise um Batterien handeln, die sich vorzugsweise im Fahrzeug eines Benutzers befinden. Ein genanntes System ist also unter anderem dann besonders bevorzugt, wenn es sich bei einer oder mehreren der mobilen Energie-Quellen um einen Energie-Speicher, insbesondere Batterien handelt, wobei eine oder mehrere der mobilen Energie-Quellen vorzugsweise Teil von Fahrzeugen sind, insbesondere von Elektrofahrzeugen und/oder Hybridfahrzeugen. In diesem Dokument soll unter den Begriffen "Fahrzeug", "Elektroauto" oder "Batterie" neben der Bedeutung der jeweiligen Worte zusätzlich auch eine beliebige mobile Energie-Quelle verstanden werden. Entsprechend ist unter "laden" und "entladen" auch allgemein das Zuführen von Energie zur mobilen Energie-Quelle und die Abgabe von Energie aus der mobilen Energie-Quelle zu verstehen.

Die Entscheidungsprozesse, die zur effizienten Nutzung von Energie beispielsweise in einem Haushalt o.ä. notwendig sind, werden durch das genannte verteilte Muitiagentensystem realisiert. Unter der "Nutzung" oder "Energienutzung" ist die Verwendung von Energie aus Energie-Quellen zu verstehen, insbesondere die Verwendung von Energie aus mobilen Energie-Quellen und/oder einem externen Stromnetz und/oder stationären Energie-Quellen zum Betrieb von Energie-Verbrauchern und/oder zur Ladung von mobilen und/oder stationären Energie-Quellen.

Ziel der Erfindung ist die Optimierung der Energie-Nutzung in einem lokalen System. Diese Optimierung kann sich beispielsweise auf eine oder mehrer der folgenden Zielvorgaben erstrecken: Die Glättung der systemspezifischen Lastkurve beim Energieverbrauch oder die Minimierung der Energiekosten oder die Optimierung der Energieverfügbarkeit (geplante Nutzung von Fahrzeugen, Reserven bei Stromausfall etc.) oder die Entlastung des öffentlichen Stromnetzes oder die Stromaufnahme oder die Stromabgabe durch das lokale System an das systemexterne Energie-Netz (Netz der öffentlichen Stromversorgung) in Situationen in denen dies vom Betreiber des systemexternen Energie-Netzes gewünscht ist (z.B. zur Vermeidung von Netzüberlastungen). Dies wird insbesondere erreicht durch dynamisches Hinzufügen (zum System bzw. zum systeminternen Energie-Netz) und Schalten einer oder mehrerer mobiler Energie-Quellen.

Die oben erwähnten Agenten übernehmen die automatische Anmeldung und Authentifizierung der mobilen Energie-Quelle bzw. des Fahrzeugs. Dies geschieht bevorzugt durch die Zusammenarbeit zwischen CA und SA. Über Interaktionsprotokolle werden dann die aktuellen Daten zur Batterie zwischen den Agenten ausgetauscht. Das ermöglicht ein automatisches und autonomes Erkennen des aktuellen Fahrzeugs und der aktuellen Batterie und deren Zustände. Durch diese technische Umsetzung werden das Fahrzeug und die Batterie austauschbar und die Konfiguration kann dynamisch verändert werden. Auch ist es möglich, mehrere Fahrzeuge bei einer Station anzumelden. Die Ermittlung der in der Batterie gespeicherten Energiemenge E kann ebenfalls automatisch erfolgen, beispielsweise wenn die mobile Energie-Quelle bei der Station angemeldet und/oder über eine Energieübertragungseinrichtung mit dem systeminternen Energie-Netz verbunden ist.

Außerdem wird ein aktueller Energienutzungs-Plan für die Energiemenge E in der mobilen Energie-Quelle (z.B. geplante Nutzung des Fahrzeugs) erstellt, an den SEA oder den SA übermittelt und mit eventuell vorhandenen Energienutzungs-Plänen des Heimbereichs (z.B. geplante Nutzung von bestimmten Energie-Verbrauchem) abgeglichen. Solche Pläne können beispielsweise die Art und/oder Anzahl der genutzten Energie-Verbraucher und/oder die Zeit in der sie genutzt werden und/oder die Dauer und/oder den Umfang ihrer Nutzung enthalten, wobei diese Parameter durch den Benutzer oder durch einen Agenten festgelegt werden können. Der Energienutzungs-Plan für die mobile Energie-Quelle und den Heimbereich beruht unter anderem vorzugsweise auf dem aktuellen Zustand der mobilen Energie-Quelle und den aktuellen Plänen des Nutzers. Eine Aufgabe der Agenten besteht auch im Erkennen der persönlichen Pläne des Nutzers, dessen "Energie-Nutzungs-Gewohnheiten", und dem Erstellen einer Prognose für die zukünftige Nutzung.

Bevorzugt erfolgt ein automatischer Ausgleich der Lastspitzen durch Hinzuschalten der mobilen Energie-Quelle zum Energie-Netz des Systems, um die durch das System ermittelten Energie-Verbraucher zu speisen. Das bedeutet, dass ein Teil des Gesamtenergieverbrauchs im System durch Einspeisung von Energie aus der mobilen Energie-Quelle in das systeminterne Energie-Netz gedeckt wird. Das Ziel ist, die Schwankung des nicht durch die mobilen Energie-Quellen (und gegebenenfalls stationäre Energie-Quellen, vgl. unten) gedeckten Anteils des Gesamtenergieverbrauchs im System gering zu halten, d.h. allgemein, der nicht von Komponenten bzw. Energie-Quellen des Systems bezogene Anteil der Energie, die zur Deckung des Energie-Verbrauchs benötigt wird, soll bevorzugt möglichst konstant gehalten werden.

Der Vorgang der Entladung (Zeitpunkt, Dauer, Menge) wird technisch durch Kommunikation über Interaktionsprotokolle zwischen den Agenten gesteuert. Über diese Protokolle werden Ontologien ausgetauscht, die die notwendigen aktuellen Daten für die Entladung der mobilen Energie-Quellen beinhalten. Außerdem wird dadurch die Schaltung des internen Energie-Netzes auf der Seite der mobilen Energie-Quelle und auf der Seite des Heimbereichs synchronisiert. Die Agenten nutzen dabei auf beiden Seiten eine Software-Schnittstelle, um eine Schaltung auslösen zu können. Durch dynamische Interaktion von intelligenten Agenten wird das Aufladen der mobilen Energie-Quelle vorzugsweise zu einem Zeitpunkt geringer Energiekosten realisiert.

Die Komponenten des Systems sind vorzugsweise innerhalb und/oder neben und/oder auf einem Gebäude, einem Gebäudekomplex oder einer Gruppe von Gebäuden angeordnet, wobei es sich beim Gebäude, dem Gebäudekomplex oder der Gruppe von Gebäuden vorzugsweise um Wohngebäude und/oder Bürogebäude und/oder Produktionsstätten handelt. Betrachtet man beispielsweise die Beziehung zwischen der öffentlichen Energie-Versorgung und den angeschlossenen Haushalten, so stellt die Erfindung ein Subsystem davon dar. Heutzutage obliegt es dem Energie-Versorger selbst, die Lastkurve eines überregionalen Systems aus Haushalten, Produktionsstätten, öffentlichen Gebäuden etc. durch das Abschalten von Energie-Verbrauchern in öffentlichen Gebäuden oder durch einen über den Tagesverlauf sich ändernden Strompreis, der das Verbraucherverhalten beeinflusst, zu glätten. Im Gegensatz dazu zielt die Erfindung auf eine Glättung der Lastkurve von lokalen Systemen ab und erreicht so ebenfalls eine Glättung der Gesamtlastkurve eines überregionalen Systems. Während ein Energie-Versorger außer in öffentlichen Gebäuden kaum Kontrolle über einzelne Energie-Verbraucher beispielsweise in einem Haushalt haben kann, ist dies innerhalb eines lokalen Systems möglich, was eine wesentlich verbesserte Feinkontrolle erlaubt. Gegenüber einem überregionalen System ist eine Vielzahl von lokalen Systemen in Bezug auf die Steuerung des Energieverbrauchs auch weniger störungsanfällig und dabei flexibler. Dennoch bleibt für den Energie-Versorger die Regulierungsmöglichkeit über die Strompreisgestaltung erhalten. Zusätzlich ist durch Umverteilung der Last innerhalb des lokalen Systems eine Glättung der Lastkurve auch ohne Reduktion des Energieverbrauchs möglich, somit wird der Bewohner in der Nutzung von Energie-Verbrauchern wie elektrischen Geräten in keinster Weise eingeschränkt.

Ein oben genanntes erfindungsgemäßes System weist als weitere Komponente bevorzugt noch eine oder mehrere stationäre Energie-Quellen und/oder Energie-Speicher auf und/oder das systeminterne Energie-Netz ist mittels einer oder mehrerer Energieübertragungseinrichtungen mit einem externen Energie-Netz verbunden, wobei es sich beim externen Energie-Netz vorzugsweise um die öffentliche Stromversorgung, d.h. das öffentliche Stromnetz handelt.

Sind als zusätzliche Komponenten des erfindungsgemäßen Systems stationäre Energie-Quellen oder Energie-Speicher wie Photovoltaik-Anlagen oder Windkraftanlagen vorhanden, wird eine noch bessere Glättung der Lastkurve ermöglicht. Natürlich wird es in den meisten Fällen weiterhin notwendig sein, dass das System an die öffentliche Energieversorgung angeschlossen ist, da eine Stromproduktion vor Ort selten bei Kosten erfolgen kann, die mit denjenigen der öffentlichen Stromversorger konkurrieren können.

In einer weiteren bevorzugten Ausführungsform weist das System außerdem Messeinrichtungen zur Messung von Umweltbedingungen auf, insbesondere Messeinrichtungen zur Messung einer oder mehrerer der folgenden Bedingungen: Sonneneinstrahlung, Windstärke, Niederschlagsmenge, Luftfeuchtigkeit, Luftdruck, Temperatur, Tageslänge. Mit Hilfe solcher Messeinrichtungen kann die Energiemenge, welche aus bestimmten stationären Energie-Quellen gewonnen werden kann, prognostiziert werden.

Wie oben erwähnt, wird die Steuerung des erfindungsgemäßen Systems von einem Multiagentensystem realisiert. Dabei stellen sich die Aufgaben der einzelnen Agenten im Detail bevorzugt wie folgt dar:

Der CA befindet sich auf einer Management-Einheit, die der mobilen Energie-Quelle zugeordnet ist (CA-ME). Dort überwacht er die in der Energie-Quelle vorhandene Energiemenge E und besitzt auch zusätzliche Informationen über die Tätigkeiten und Pläne des Nutzers der mobilen Energie-Quelle. Bei eventuell alarmierenden Zuständen der mobilen Energie-Quelle (vorhandene Energiemenge E bzw. dessen Veränderung) leitet er Gegenmaßnahmen ein. Der CA kommuniziert mit dem SA und/oder dem SEA und versucht diesem immer ein aktuelles Bild der in der mobilen Energie-Quelle vorhandenen Energiemenge E zu übermitteln, damit dieser den Energiefluss von und zur mobilen Energie-Quelle in optimaler Weise steuern kann.

Der CA überwacht neben der Energiemenge E weitere Daten, die in den Nutzer-Profilen festgehalten sind: Wenn es sich bei der mobilen Energie-Quelle um ein Fahrzeug handelt, dann können beispielsweise die Nutzerprofile mit den gefahrenen Routen und/oder den zurückgelegten Strecken und/oder dem Bedarf an Energie regelmäßig auf den neuesten Stand gebracht werden. Unter Nutzer-Profilen sind Daten zu verstehen, die dem entsprechenden Nutzer zugeordnet sind und dessen Energie-Nutzungsverhalten beschreiben. Beschränkungen bezüglich des Energieflusses von und zur mobilen Energie-Quelle (Lade-/Entlade-Beschränkungen der Batterie) werden ebenfalls auf dem neuesten Stand gehalten und regelmäßig kommuniziert und ausgetauscht. Ist die mobile Energie-Quelle ein Fahrzeug, so besitzt der CA die Fähigkeit, gefahrene Strecken aufzuzeichnen bzw. über Messeinrichtungen zu messen und mit dem Energieverbrauch in Relation zu setzen, um die Dauer der Fahrten und den damit einhergehenden Energieverbrauch vorhersagen zu können.

Der CA fungiert darüber hinaus als Schnittstelle für den Nutzer bzw. Fahrer, um dessen Interessen, also beispielsweise Pläne und Regeln zur Nutzung des Fahrzeugs, aufzunehmen oder dessen Informationsbedarf zu decken. Insbesondere kann er über eine Benutzerschnittstelle oder eine Ausgabevorrichtung Auskunft über die vorhandene Energiemenge E und allfällige Beschränkungen bezüglich des Energieflusses von und zur mobilen Energie-Quelle geben. Neben der Überwachung der vorhandenen Energiemenge E in der mobilen Energie-Quelle, gibt der CA auch die Zeiträume und Mengen für den Energiefluss von und zur mobilen Energie-Quelle vor und sorgt für eine sichere Kommunikation (verschlüsselte Kommunikationsverbindung) mit der Station bzw. dem SA und/oder mit dem Heimbereich bzw. dem SEA.

Der SA überwacht die Abläufe auf der Station. Er erkennt, wenn sich eine mobile Energie-Quelle der Station nähert und handelt in einem Handshake-Vorgang mit dem CA gegebenenfalls einen Anschluss der mobilen Energie-Quelle an die Station und damit ans systeminterne Energie-Netz aus. Ein Anschluss wird nur solchen mobilen Energie-Quellen ermöglicht, die in der Handshake/Aushandlungsphase die geeigneten Authentifizierungsdaten übergeben. Der SA ist also verantwortlich für den Anschluss der mobilen Energie-Quelle an die Station sowie die Authentifizierung von mobilen Energie-Quellen und Agenten und er dient als Einstiegspunkt für die Kommunikation zwischen den CAs und den übrigen Komponenten des Systems. Insbesondere fungiert der SA als Kommunikationsbrücke zwischen CA und SEA, protokolliert den Energiefluss von und zur mobilen Energie-Quelle und beantwortet Anfragen über die in der mobilen Energie-Quelle vorhandene Energiemenge E oder die maximal mögliche Energiemenge. Des Weiteren erteilt der SA Auskunft über Protokolle betreffend den Energiefluss von oder zu der mobilen Energie-Quelle, über den eigenen Zustand und über Anmeldungs-Protokolle (Login-Protokolle).

Der SEA befindet sich auf der SEA-ME im Heimbereich des Nutzers. Bei ihm laufen alle relevanten Datenströme zusammen, die den Nutzer betreffen. Über dessen Schnittstelle kann der Nutzer sämtliche Informationen, die das Energiemanagement betreffen, einsehen und kann an den vorhandenen Nutzerpräferenzen bzw. in den Nutzer-Profilen Veränderungen vornehmen, also beispielsweise Regeln und Pläne für die Energie-Nutzung ändern oder hinzufügen. Unter Berücksichtigung der Veränderungen erstellt der SEA dann entsprechende Regeln und steuert bzw. programmiert damit den SEC. Der SEA ist also verantwortlich für die Verwaltung der Voreinstellungen und Pläne des Nutzers und die Steuerung des SEC. Er ermöglicht bzw. bewerkstelligt den Zugriff auf den Energie-Controller, entweder direkt oder über den SEC. Darüber hinaus zeigt der SEA die aktuelle Schaltung des Energie-Controllers an und ermöglicht und/oder berechnet Regelmodifikationen. Die SEA hält über Identifikationsprozeduren ein Vertrauensverhältnis mit den Stationen, mobilen Energie-Quellen und dem Nutzer aufrecht. Die Nutzeridentifikation kann dabei über biometrische Verfahren erfolgen.

Der SEC ist verantwortlich für die relevanten Schaltungen, also die Regelung von Stromkreisen im systeminternen Energie-Netz. Dies beinhaltet auch diejenigen Schaltungen, welche den Anschluss (also das Hinzufügen und Entfernen) von bestimmten mobilen Energie-Quellen betreffen. Der SEC steuert den Energie-Controller und damit auch den Energieverbrauch im System, also beispielsweise in einem Haushalt. Gemäß den Plänen und Regeln zur Energie-Nutzung im System nimmt er die Steuerung der Energieverteilung vor. Darüber hinaus zeichnet er den mittels Messeinrichtungen gemessenen Energieverbrauch, also die Nutzung der Energie-Verbraucher einzeln, in Gruppen, oder gesamthaft auf, woraus anschließend Vorhersagen zum zukünftigen Energieverbrauch bzw. zur zukünftigen Energienutzung generiert werden können. Über eine sichere Kommunikationsverbindung steht der SEC in Kontakt mit dem SEA und stellt diesem eine Schnittstelle zur Verfügung, damit der SEA die Schaltung des Energie-Controllers abfragen und im Gegenzug den Energie-Controller direkt oder indirekt steuern kann.

Die obigen Ausführungen zur Verteilung der Aufgaben unter den Agenten stellen lediglich eine bevorzugte Ausgestaltungsform dar, wobei sich die Erfindung nicht auf diese Aufteilung der Aufgaben bzw. diese Kombinationen von Aufgaben beschränkt: Wesentlich ist, dass die Agenten bzw. die Management-Einheiten auf denen sie sich befinden in der Lage sind das erfindungsgemäße Verfahren durchzuführen. Es wäre beispielsweise möglich, die Funktionalität des SEC und/oder der SA in den SEA zu integrieren, oder zwei oder mehr der Agenten könnten auf einer einzigen Management-Einheit ausgeführt werden. Darüber hinaus soll festgehalten werden, dass die oben genannten Aufgaben und Tätigkeiten der Agenten auch einzeln - also nicht nur in Kombination - bevorzugte Ausgestaltungsformen darstellen. Da jedem Agenten eine Management-Einheit zugeordnet ist, sind obige Ausführungen bevorzugt auch so zu verstehen, dass die in Bezug auf einen bestimmten Agenten beschriebenen Aufgaben und Funktionen von der ihm zugeordneten Management-Einheit erfüllt werden.

Die Abläufe, die zur Optimierung der Energienutzung notwendig sind, können in Form eines Verfahrens beschrieben werden. Ein solches erfindungsgemäßes Verfahren zur Optimierung der Energienutzung im oben genannten lokalen System weist vorzugsweise mindestens die folgenden Merkmale auf:
a) der Energieverbrauch der Energie-Verbraucher V₁-V_{B} (B ∈ IN; B ≥ 1) des Systems zu den Zeitpunkten T₁-T_{C} (C ∈ IN; C ≥ 1) oder einer Teilmenge davon gemessen wird, wobei die Messwerte für den Energieverbrauch direkt oder indirekt an eine Management-Einheit übermittelt werden, wobei auf der Grundlage der Messwerte für den Energieverbrauch eine Berechnung des Gesamtenergieverbrauchs G zu den Zeitpunkten T_{D}-T_{E} (D,E ∈ IN; 1≤D≤E≤C) durchgeführt wird, wobei es sich bei der Management-Einheit um die SEC-ME oder die SEA-ME handelt.
b) von einer Management-Einheit auf der Grundlage von zumindest dem Gesamtenergieverbrauch G zu den Zeitpunkten T_{D}-T_{E} oder einer Teilmengen davon eine Berechnung des voraussichtlichen Gesamtenergieverbrauchs Z zu den (zukünftigen) Zeitpunkten T_{G}-T_{H} (G,H ∈ IN; C≤G≤H) durchgeführt wird, wobei es sich bei der Management-Einheit vorzugsweise um die SEA-ME handelt,
c) die in den Energie-Quellen Q₁-Q_{K} (K ∈ IN; K ≥ 1) gespeicherten Energiemengen E₁-E_{K} (K ∈ IN; K ≥ 1) gemessen werden, und die Messwerte für E₁-E_{K} an die CA-ME übermittelt werden,
d) die Messwerte für E₁-E_{K} von der CA-ME direkt oder indirekt an die SEA-ME übermittelt werden,
e) die SEA-ME zumindest auf der Grundlage des Gesamtenergieverbrauchs Z und der Messwerte für E₁-E_{K} eine Planung für eine optimierte Energie-Nutzung im System zu den (zukünftigen) Zeitpunkten T_{G}-T_{H} vornimmt, d.h. dass die SEA-ME vorzugsweise
   - eine Berechnung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch E₁-E_{K} gedeckt werden kann, und/oder
   - eine Berechnung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch E₁-E_{K} gedeckt werden kann und/oder wie viel Energie an Q₁-Q_{K} abgegeben werden kann, so dass: der nicht durch E₁-E_{K} gedeckte Anteil des voraussichtlichen Gesamtenergieverbrauchs Z zu den Zeitpunkten T_{G}-T_{H} und/oder die Summe aus der an die Q₁-Q_{K} abgegebenen Energie und dem voraussichtlichen Gesamtenergieverbrauchs Z zu den Zeitpunkten T_{G}-T_{H} geringere Schwankungen als der voraussichtlichen Gesamtenergieverbrauchs Z zu den Zeitpunkten T_{G}-T_{H} aufweist, und gegebenenfalls
   - eine Berechnung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch eine oder mehrere stationäre Energie-Quellen gedeckt werden kann und/oder wie viel Energie an Q₁-Q_{K} abgegeben werden kann, so dass: der nicht durch die stationären Energie-Quellen gedeckte Anteil des voraussichtlichen Gesamtenergieverbrauchs Z zu den Zeitpunkten T_{G}-T_{H} und/oder die Summe aus der an die Q₁-Q_{K} abgegebenen Energie und dem voraussichtlichen Gesamtenergieverbrauchs Z zu den Zeitpunkten T_{G}-T_{H} geringere Schwankungen als der voraussichtlichen Gesamtenergieverbrauchs Z zu den Zeitpunkten T_{G}-T_{H} aufweist.
f) die SEA-ME auf der Grundlage des Ergebnisses aus e) direkt oder indirekt den Energiefluss zwischen den mobilen Energie-Quellen, den Stationen und den Verbrauchern regelt.

Es wird also zumindest aus der Energie-Nutzungs-Historie und/oder dem während eines Zeitrums in der Vergangenheit gemessenen Energieverbrauch, auf die zukünftige Energie-Nutzung und/oder den zukünftigen Energieverbrauch geschlossen. Die sich daraus ergebende (prognostizierte) Lastkurve wird mit der in den mobilen Energie-Quellen vorhandenen Energiemenge E verglichen und es wird ermittelt, welche Lastspitzen der Lastkurve (d.h. welcher Anteil des voraussichtlichen Gesamtenergieverbrauchs) durch Einspeisung von Energie aus einem oder mehreren mobilen Energie-Quellen und/oder stationären Energie-Quellen gedeckt werden können, so dass die zur Deckung des restlichen Energiebedarfs aus systemexternen Quellen zu beziehende Energiemenge über die Zeit möglichst konstant bleibt. Wenn ein Bezug von Energie aus dem öffentlichen Stromnetz ausscheidet, z.B. im Falle eines Stromausfalls, wird ermittelt, wann Energie aus den mobilen Energie-Quellen zum Betrieb der Energie-Verbraucher eingespeist und/oder wie diese Energie unter den Energie-Verbrauchern verteilt werden soll, entsprechend erfolgt dann die Steuerung des Energie-Controllers. Es kann deshalb vorteilhaft sein, dass nicht nur der Energie-Verbrauch aller Energie-Verbraucher gemeinsam, sondern gegebenenfalls auch der Energieverbrauch der einzelnen Energie-Verbraucher oder von Gruppen von Energie-Verbrauchern gemessen wird. Weiterhin wäre es von Vorteil, wenn jedem Energie-Verbraucher oder Gruppen von Energieverbrauchern eine Priorität zuordnet würde, um die Steuerung des Energie-Controllers gemäß dieser Priorität vornehmen zu können.

Ein oben genanntes Verfahren zeichnet sich also bevorzugt dadurch aus, dass die Verfügbarkeit von Energie aus einem externen Stromnetz und/oder systemexterner Energie-Quellen mittels einer oder mehrerer Messeinrichtungen überwacht wird und bei eingeschränkter Verfügbarkeit die SEA-ME direkt oder indirekt den Energiefluss von der mobilen Energie-Quelle über die Station zu den Energie-Verbrauchern regelt. Es kann auch von Vorteil sein, wenn das Verfahren, wie es oben beschrieben wurde, es ermöglicht, dass die SEA-ME eine gezielte Leistungsdrosselung und/oder Leistungserhöhung und/oder eine gezielte Ab- und/oder Einschaltung von einzelnen Energie-Verbrauchern oder Gruppen von Energie-Verbrauchern und/oder die Zu- oder Abschaltung von weiteren stationären Energie-Quellen und/oder stationären Energie-Speichern veranlasst, wobei es bevorzugt ist, dass die Impulse für diese Aktionen über eine externe Schnittstelle (bspw. zum Stromnetzbetreiber) in das System gelangen können, und dass das System die tatsächlich auszuführenden Aktionen auf Basis der eingehenden Impulse, der systeminternen Anforderungen und vorher festgelegter Regeln und/oder der Vertragbeziehungen zwischen Nutzer und Netzbetreiber ermittelt. Denn wenn der Netzbetreiber Regelenergie anfordert, muss zuerst überprüft werden, ob das System technisch in der Lage ist diese zu liefern und was vorher vertraglich bzgl. der Lieferung von Regelenergie vereinbart wurde.

Von besonderer Bedeutung ist das genannte Verfahren wenn die Berechnung des voraussichtlichen Gesamtenergieverbrauchs Z zu den (zukünftigen) Zeitpunkten T_{G}-T_{H} und/oder der optimierten Energie-Nutzung zu den (zukünftigen) Zeitpunkten T_{G}-T_{H} zusätzlich auf der folgenden Grundlage erfolgt:
- eine von einem Benutzer festgelegte geplante Nutzung von Energie-Verbrauchern zu den Zeitpunkten T_{G}-T_{H} oder einer Teilmenge davon, welche vom Benutzer über eine Benutzerschnittstelle eingegeben und direkt oder indirekt an die SEA-ME übermittelt wird, und/oder
- eine von einem Benutzer festgelegte, geplante Ladung und/oder Entladung von Energie-Quellen zu der Zeitpunkte T_{G}-T_{H} oder einer Teilmenge davon, welche vom Benutzer über eine Benutzerschnittstelle eingegeben und direkt oder indirekt an die SEA-ME übermittelt wird, und/oder
- die von Messeinrichtungen gemessene Energiemenge, welche an eine oder mehrere Energie-Quellen zu den Zeitpunkten T₁-T_{C} oder einer Teilmenge davon zugeführt oder von diesen bezogen wurde, wobei der gemessene Energiemenge direkt oder indirekt an die SEA-ME und/oder CA-ME übermittelt wird, und/oder

- die von Messeinrichtungen zu den Zeitpunkten T₁-T_{C} oder einer Teilmenge davon gemessene Umweltbedingungen, wobei es sich bei den Umweltbedingungen vorzugsweise um die Windstärke und/oder Temperatur und/oder Sonneneinstrahlung und/oder Tageslänge, und/oder
- den voraussichtlichen Umweltbedingungen zu den Zeitpunkten T_{G}-T_{H}, wobei es sich bei den Umweltbedingungen vorzugsweise um die Windstärke und/oder Temperatur und/oder Sonneneinstrahlung und/oder Tageslänge und/oder Jahreszeit handelt, und/oder
- dem voraussichtlichen Strompreis zu den Zeitpunkten T_{G}-T_{H} oder einer Teilmenge davon.

Ein oben genanntes Verfahren kann insbesondere auch dann bevorzugt sein, wenn als Teil des Verfahrens ermittelt wird, ob in der Nähe einer Station des Systems eine mobile Energie-Quelle vorhanden ist, und wenn dies zutrifft, eine Kommunikationsverbindung zwischen der CA-ME und der SA-ME oder der SEA-ME aufgebaut wird, wobei zumindest Daten zur eindeutigen Identifizierung der mobilen Energie-Quelle und/oder deren Besitzer und/oder deren Benutzer von der CA-ME an die SA-ME übertragen werden und eine Authentifizierung stattfindet, wobei nach erfolgreicher Authentifizierung die mobile Energie-Quelle mittels einer Energieübertragungseinrichtung an die Station angeschlossen wird.

Im oben beschriebenen Verfahren wird bevorzugt durch ein Broadcast-Signal ermittelt, ob eine mobile Energie-Quelle vorhanden ist. Beim Broadcast oder Rundruf handelt es sich um eine Nachricht, bei der Datenpakete von einem Initiator - hier einer Managment-Einheit - aus an alle Teilnehmer eines Netzes übertragen werden. Die Management-Einheit, welche den Prozess initiiert stellt mittels der übertragenen Datenpakete eine Anfrage, auf die ein Peer, der diese Anfrage erhält - hier eine oder mehrere andere Management-Einheiten -, antworten kann. Sobald der Initiator eine Antwort erhält, kann dieser beginnen, eine Session zu etablieren. Der Zustand der regelmäßigen, ununterbrochenen Kommunikation wird in diesem Dokument als Session bezeichnet und die Aufrechterhaltung als "Session KeepAlive" oder "KeepAlive". Die Aufrechterhaltung einer Session kann entweder über einen push-Mechanismus oder einen pull-Mechanismus erfolgen. Solche Mechanismen sind dem Fachmann bekannt.

In einer weiteren bevorzugten Ausgestaltungsform zeichnet sich das genannte Verfahren dadurch aus, dass die SA-ME und/oder eine oder mehrere CA-ME den Energiefluss zwischen mehreren Energie-Quellen regelt. So kann beispielsweise eine der mobilen Energie-Quellen, welche beispielsweise während des Tages geladen wurde am Abend ihre Energie ganz oder teilweise an eine oder mehrere andere mobile Energie-Quelle abgeben, welche z.B. während des Tages Energie abgegeben hat.

Ein genanntes Verfahren kann insbesondere auch dann bevorzugt sein, wenn der Energiefluss zwischen mobiler Energie-Quelle und Energie-Verbrauchern über einen Energie-Controller geregelt wird, welcher wiederum direkt oder indirekt von der SEA-ME gesteuert wird, wobei es bevorzugt ist, dass der Energiefluss von und zur mobilen Energie-Quelle auch von der CA-ME gesteuert wird, wobei die Steuerung des Energieflusses durch die CA-ME höhere Priorität besitzt als diejenige durch die SEA-ME. Denn es kann vorteilhaft sein, die letztendliche Entscheidung darüber, wie viel Energie aus der mobilen Energie-Quelle abgezogen wird, dem CA zu überlassen. So wird verhindert, dass für eine Verwendung der mobilen Energie-Quelle zu wenig Energie verbleibt. Wenn es sich bei der mobilen Energie-Quelle beispielsweise um ein Fahrzeug handelt, dessen Dienste zu einem bestimmten Zeitpunkt benötigt werden, muss sichergestellt werden, dass die Energiemenge E in der mobilen Energie-Quelle dazu ausreicht.

Wie weiter oben beschrieben, wird das System durch Management-Einheiten bzw. die sich darauf befindenden Agenten gesteuert. Dabei läuft die Interaktion zwischen den Agenten bevorzugt wie folgt ab:

Die Agenten koordinieren sich selbstständig. Hierbei authentifizieren sie sich gegenseitig und tauschen benötigte Daten aus. Die Authentifizierung erfolgt durch gängige Public-Key-Verfahren.

Die Interaktion zwischen CA und SA beinhaltet als ersten Schritt die Anmeldung des CA beim SA. Die eigentliche Sitzung wird normalerweise initiiert, nachdem das Fahrzeug an die Station angedockt hat. Nach dem erfolgreichen Handshake (= gegenseitige Authentifizierung) sendet der CA Daten bezüglich der Batterie (technische Merkmale, Zustand) sowie Daten, die das Fahrverhalten und den Verbrauch beschreiben oder andere Daten aus dem Nutzer-Profil. Wird die physische Verbindung zwischen Fahrzeug und Station getrennt, so wird normalerweise auch die Kommunikationsverbindung in beidseitigem Einvernehmen aufgelöst. Es findet eine Abmeldung des CA vom SA statt.

Der SA und der SEA treten in Kontakt, wenn sich der CA erfolgreich angemeldet hat. Dann leitet der SA die technischen Daten der Batterie und die Verbrauchsdaten, Regeln etc. (Benutzer-Profil des Fahrers) an den SEA weiter. Letzterer benötigt diese Daten um das Entladen und das Aufladen der Batterie einzuplanen. Nimmt der Nutzer in der Wohnung (Heimbereich) Aktualisierungen an seinem Profil vor, so werden diese Änderungen auch dem SA zur Weiterleitung mitgeteilt. Der SA kann jedoch auch via Nachfrage, vorzugsweise vor Abkoppelung des Fahrzeugs, das aktuelle Benutzer-Profil für den Heimbereich abfragen, um es dem zugehörigen CA mitzuteilen.

Auf der Grundlage des vorhergesagten Energie-Verbrauchs, bzw. der vorhergesagten Nutzung des Fahrzeugs, und der verfügbaren Energie in der Batterie, wird der SEC vom SEA angewiesen, den Energie-Controller umzuprogrammieren. Auch kann der SEA, meist durch Initiative des Nutzers, außerplanmäßige Änderungen veranlassen und dem SEC mitteilen.

Beim Betrieb des Systems werden persönliche Daten über Fahrzeug, Heimbereich, Energieverbrauch oder andere persönliche Details übertragen und kommuniziert. Bei der Kommunikation zwischen dem Fahrzeug (CA) und der Station (SA) oder zwischen der Station (SA) und dem Heimbereich (SEA), werden persönliche Daten, wie Ladezustand, Terminkalender etc., ausgetauscht. Deshalb müssen geeignet Sicherheitsmaßnahmen insbesondere auf Softwareebene getroffen werden, die einen möglichen Missbrauch dieser Daten verhindern. Dazu gehören unter Anderem die Authentifizierung bzw. Autorisierung, eine verschlüsselte Kommunikation und eine sichere Datenhaltung. Über die Station werden außerdem Daten in Bezug auf den Energietransfer ausgetauscht und sie bietet den Zugang zum Heimbereich des Nutzers. Es sind also Maßnahmen erforderlich, die den Nutzer entsprechend authentifizieren und dessen Autorisierung überprüfen. Vorzugsweise findet eine weitere Authentifizierung bzw. Autorisierung zwischen der Station (SA) und dem Heimbereich (SEA) statt.

Im Folgenden soll die Erfindung anhand eines Beispiels und Zeichnungen näher erläutert werden, wobei sich die Erfindung natürlich nicht auf diese beschränkt.

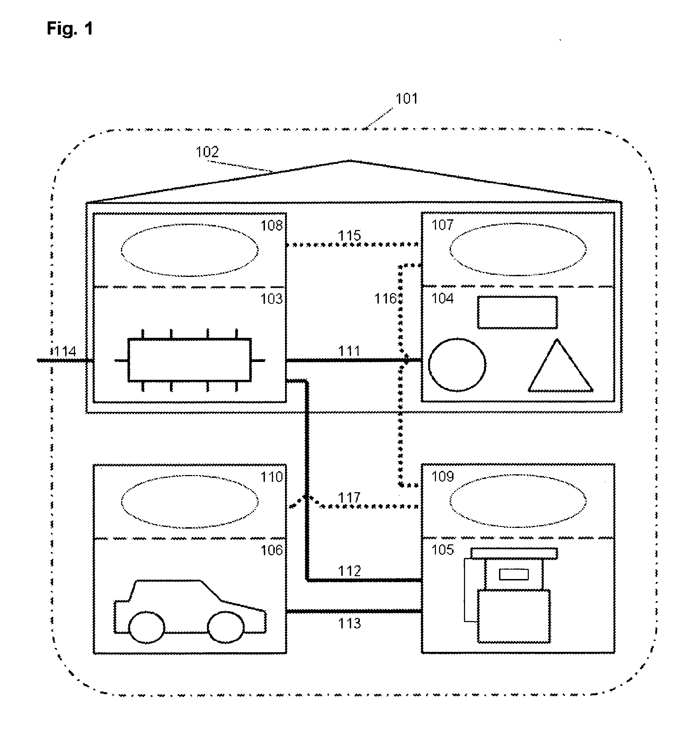

**Fig.1** Darstellung des Gesamtsystems
**Fig.2** Planung der Energie-Nutzung durch die SEA
**Fig.3** Aktivitäten des CA, Kontaktaufnahme mit SA

### Beispiel

Das folgende Ausführungsbeispiel versucht anhand eines Szenarios den Ablauf der Vorgänge im verteilten System beispielhaft darzustellen. Dabei wird der Vorgang beschrieben, wie sich das System bei der Entladung/Ladung der Batterie verhält. Um aber das Szenario in den Gesamtablauf einzubetten, ist die Beschreibung von Szenarien notwendig, die zeitlich unabhängig von der eigentlichen Entladung stattfinden können. Dies betrifft zum Beispiel die Planung der Entladung durch den SEA, die im Beispiel anhand von Benutzer-Präferenzen, Benutzer-Historie und der aktuellen Energienutzung festgelegt wird.

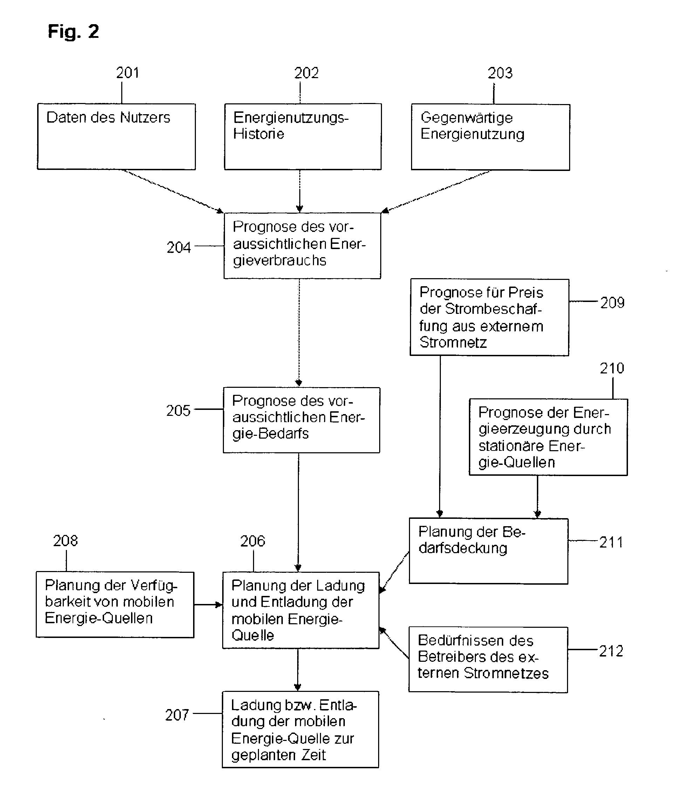

Die Planung durch den SEA erfolgt wie in **Fig. 2** dargestellt. Die genannte Abbildung beschreibt, welcher Input und welche Schritte notwendig sind, damit eine Planung durchgeführt werden kann. Der SEA benutzt zur Planung Daten aus unterschiedlichen Quellen. Dabei wird zum Ersten auf die Daten des Nutzers **(201)** zurückgegriffen, dessen Terminplanung eine entscheidende Rolle für die Planung des SEA spielt. Wichtig sind beispielsweise die Bewegungsdaten des Nutzers, also z.B. ein geplanter erhöhter Energieverbrauch im Heimbereich oder geplante Extrafahrten mit dem Fahrzeug, die eine Ladung der mobilen Energie-Quelle notwendig machen. Des Weiteren wird die Energienutzungs-Historie berücksichtigt **(202)**, anhand derer man das gegenwärtige bzw. zukünftige Verhalten des Nutzers bzw. die gegenwärtige oder zukünftige Energienutzung einschätzen kann. Als Drittes betrachtet man die gegenwärtige Energienutzung **(203)** im Heimbereich. Aus diesen drei Faktoren wird ein Verlauf der Energienutzung, d.h. der voraussichtliche Energieverbrauch prognostiziert **(204)**. Dadurch werden etwaige Lastspitzen vorhergesagt, für die eine Kapazitäts-Anforderung, d.h. eine Prognose des voraussichtlichen Energie-Bedarfs **(205)** berechnet wird. Der Preis der Strombeschaffung aus einem externen Stromnetz wird auf der Grundlage von Informationen wie beispielsweise dem EEX (European Energy Exchange) Day Ahead (Strombörse), dem Terminmarkt (Strombörse) oder Bedingungen wie sie in Verträgen mit Energieversorgungsunternehmen (EVU) festgehalten sind, prognostiziert **(209)**. Darüber hinaus muss eine Prognose der Energieerzeugung durch stationäre Energie-Quellen bzw. der Verfügbarkeit von Energie aus stationären Energie-Quellen erstellt werden **(210)**. Diese hängt beispielsweise bei Einsatz von Photovoltaik-Anlagen oder Windkraftanlagen vom Wetter und beim Betrieb eines kleinen Blockheizkraftwerks von den Brennstoffpreisen ab. Auf der Grundlage dieser Prognose **(210)** und der Prognose des Strompreises **(209)** kann nun geplant werden, wie der Bedarf an Energie in Bezug auf die Kosten am Besten zu decken wäre **(211)**. Gegebenenfalls sind außerdem die Bedürfnisse des Stromnetzbetreibers bezüglich der Netzstabilität zu berücksichtigen **(212)**. Aus den Informationen zur Verfügbarkeit der mobilen Energie-Quellen **(208)**, der Prognose des voraussichtlichen Energiebedarfs **(205)**, der Planung der Bedarfsdeckung **(211)** und gegebenenfalls den Bedürfnissen des Stromnetzbetreibers **(212)** wird schließlich ein Plan für die Ladung und Entladung der mobilen Energie-Quellen erstellt **(206)**, d.h. es wird ermittelt, wann ein Teil des voraussichtlichen Energie-Bedarfs durch mobile Energie-Quellen gedeckt werden soll und wann diese wieder geladen werden sollen. Entsprechend dieses Plans **(206)** erfolgt dann eine Ladung bzw. Entladung der mobilen Energie-Quellen **(207)**.

Einige der SEA-Aktivitäten können unabhängig davon sein, ob die mobile Energie-Quelle (hier: Fahrzeug mit Batterie) an das System angeschlossen ist oder nicht. Zum Beispiel können aus der Energienutzungs-Historie schon vorher Schlüsse gezogen werden. Diese sollten aber mit aktuellen Daten, wie beispielsweise denjenigen im Nutzer-Profil (z. B. aktueller Terminplan des Nutzers) abgeglichen werden.

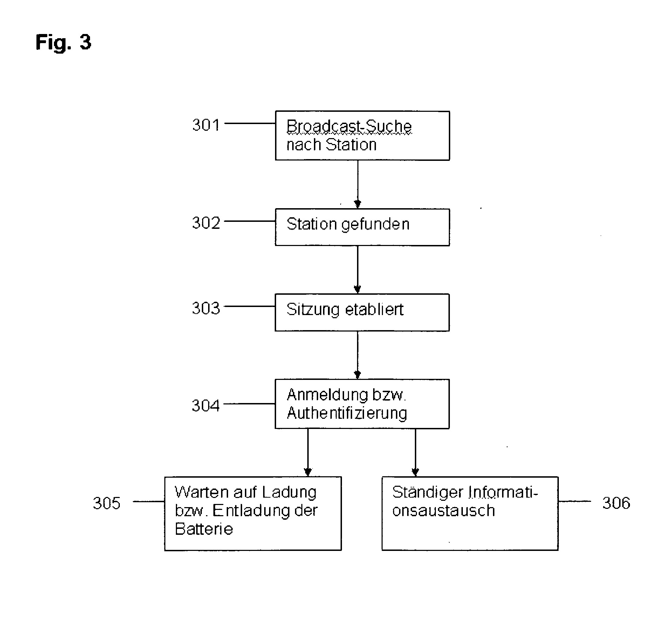

Einige Aktivitäten des CA stellen sich wie in **Fig. 3** veranschaulicht dar. Der CA wird über die Broadcast Suche **(301)** des SA gefunden **(302)**. Dann wird unter diesen Agenten eine Session aufgebaut **(303)** und ein Login/AuthentifizierungsProzess durchgeführt **(304)**. Der CA ist nun an das dezentrale Energiemanagement angeschlossen und kann auf das Laden oder Entladen der Batterie warten **(305)**. Gleichzeitig werden ununterbrochen Informationen zwischen dem CA und dem restlichen System, insbesondere dem SA und dem SEA ausgetauscht **(306)**. Dies betrifft Informationen über den Batterie-Zustand und die Nutzerdaten (Daten in den Nutzer-Profilen), die Aufschluss über die weiteren Pläne des Nutzers geben.

Das verteilte System kann nur funktionsfähig sein, wenn die Komponenten, die dynamisch hinzugefügt oder entfernt werden können (mobile Energie-Quellen bzw. CA), automatisch gefunden und integriert werden können. Dazu dient beispielsweise ein Broadcast Suchmechanismus des SA (siehe unten). Ebenso ist auch ein Broadcast Mechanismus auf der Seite des CA denkbar, doch im Folgenden wird nur eine Variante beschrieben.

Basis der Flexibilität eines verteilten Agentensystems ist die Kommunikation der Agenten untereinander. Sie ist wiederum Basis der Kooperation der Agenten untereinander. Damit die Kommunikation und Kooperation funktionieren kann, müssen die Agenten immer aktuelles Wissen über ihre Nachbarn und Kommunikations-Partner haben. Dazu gehört die Information, ob der Partner immer noch existiert, ob er in der Lage ist, zu kommunizieren oder eine Anfrage zu beantworten. Sollte dies nicht möglich sein, müsste eine Fehlersuche oder eine alternative Problemlösung der Aufgabe gesucht werden, die das System bearbeiten soll.

Die einfachste Form, die Existenz eines Nachbarn festzustellen, ist der Aufbau einer Interaktion, die in einem regelmäßigen Intervall kleine Nachrichten hin und her schickt. Der Zustand der regelmäßigen, ununterbrochenen Kommunikation wird als Session bezeichnet und die Aufrechterhaltung als "Session KeepAlive" oder "KeepAlive". Der Initiator der Session kann prinzipiell jeder Agent sein, der Austausch solcher Session Informationen, findet also zum Beispiel zwischen dem CA, SA und dem SEA statt. Der Austausch dieser Information betrifft den Anwendungsfall des verteilten Agentensystems. Hier werden die relevanten Informationen ausgetauscht, die notwendig sind um das verteilte Energiemanagement zu betreiben. Dabei werden zum Beispiel die Batterie-Informationen ausgetauscht oder eventuelle Anwenderinformationen (Daten aus den Nutzer-Profilen).

### Bezugszeichenliste:

- 101.: System
- 102.: Heimbereich
- 103.: Energie-Controller
- 104.: Energie-Verbraucher und stationäre Energie-Quellen
- 105.: Station
- 106.: Mobile Energie-Quelle
- 107.: Smart Energy Agent (SEA) / SEA-Management-Einheit (SEA-ME)
- 108.: Smart Energy Controller (SEC) / SEC-Management-Einheit (SEC-ME)
- 109.: Station Agent (SA) / SA-Management-Einheit (SA-ME)
- 110.: Car Agent (CA) / CA-Management-Einheit (CA-ME)
- 111.: Energieübertragungseinrichtung / Energiefluss
- 112.: Energieübertragungseinrichtung / Energiefluss
- 113.: Energieübertragungseinrichtung / Energiefluss
- 114.: Energieübertragungseinrichtung / Energiefluss (extern)
- 115.: Schnittstelle / Datenfluss
- 116.: Schnittstelle / Datenfluss
- 117.: Schnittstelle / Datenfluss
- 201.: Daten des Nutzers
- 202.: Energienutzungs-Historie
- 203.: Gegenwärtige Energienutzung
- 204.: Voraussichtlicher Energieverbrauch (Prognose)
- 205.: Prognose des voraussichtlichen Energie-Bedarfs
- 206.: Planung der Ladung und Entladung der Batterie
- 207.: Ladung bzw. Entladung der Batterie zur geplanten Zeit
- 208.: Planung der Verfügbarkeit von mobilen Energie-Quellen
- 209.: Prognose für Preis der Strombeschaffung aus externem Stromnetz
- 210.: Prognose der Energieerzeugung durch stationäre Energie-Quellen
- 211.: Planung der Bedarfsdeckung
- 212.: Bedürfnisse des Betreibers des externen Stromnetzes
- 301.: Broadcast-Suche nach Station
- 302.: Station gefunden
- 303.: Sitzung etabliert
- 304.: Anmeldung bzw. Authentifizierung
- 305.: Warten auf Ladung bzw. Entladung der Batterie
- 306.: Ständiger Informationsaustausch

## Patentansprüche

1. System zur Glättung der Lastkurve, insbesondere zur Entlastung des öffentlichen Stromnetzes, beim Energieverbrauch von lokalen Systemen zur Nutzung von mobilen Energie-Quellen **dadurch gekennzeichnet, dass** das System durch die Verwendung eines Multiagentensystems dezentral organisiert ist und mindestens die folgenden Komponenten aufweist:
- eine oder mehrere zentrale Management-Einheiten (SEA-ME) sowie eine oder mehrere weitere Management-Einheiten, wobei jede Management-Einheit mindestens eine Prozessoreinheit, mindestens eine Speichereinheit und mindestens eine Kommunikationseinrichtung und/oder Datenschnittstelle aufweist,
- ein oder mehrere Energie-Controller, wobei die Energie-Controller Mittel zur Regelung und/oder Schaltung von Stromkreisen aufweisen, wobei jeder Energie-Controller über eine Datenschnittstelle mit mindestens einer Management-Einheit (SEC-ME) in Verbindung steht,
- ein oder mehrere Energie-Verbraucher V₁-V_{B} (B ∈ IN; B ≥ 1),
- eine oder mehrere Messeinrichtungen zur Messung des Energieverbrauchs der Energie-Verbraucher,
- eine oder mehrere mobile Energie-Quellen Q₁-Q_{K} (K ∈ IN; K ≥ 1), wobei jeder mobilen Energie-Quelle eine Management-Einheit (CA-ME) zugeordnet ist,
- Messeinrichtungen zur Messung der in den mobilen Energie-Quellen Q₁-Q_{K} gespeicherten Energiemengen E₁-E_{K} (K ∈ IN; K ≥ 1), wobei die Messeinrichtungen, die jeweils einer mobilen Energie-Quelle Q₁-Q_{K} zugeordnet sind über Datenschnittstellen mit der jeweiligen Management-Einheit (CA-ME) in Verbindung stehen,
- eine oder mehrere ortsfeste Stationen für den Anschluss der mobilen Energie-Quellen an ein systemintemes Energie-Netz, wobei jeder Station oder jeder Gruppe von Stationen eine Management-Einheiten (SA-ME) zugeordnet ist,
- eine oder mehrere Energieübertragungseinrichtungen, welche zusammen ein systemintemes Energie-Netz, welches nicht dem öffentlichen Energienetz zuzuordnen ist, bilden, wobei zumindest die Energie-Verbraucher, die Stationen und die Energie-Controller über das systeminterne Energie-Netz miteinander in Verbindung stehen
und dass die Komponenten des Systems innerhalb und/oder neben und/oder auf einem Gebäude, einem Gebäudekomplex oder einer Gruppe von Gebäuden angeordnet sind.
- eine SA-ME und/oder eine oder mehrere CA-ME den Energiefluss zwischen mehreren Energie-Quellen regelt
wobei SEA-ME, SEC-ME, SA-ME und CA-ME Situationen ueberwachen, das Verhalten des Systems bzw. seiner Komponenten und seiner Nutzer antizipieren, Optimierungen im Svstemablauf durchführen, Fehler erkennen, entsprechend kommunizieren und sich selbstständig koordinieren.

2. System nach Anspruch 1, **dadurch gekennzeichnet, dass** mehrere oder alle der Komponenten des Systems, vorzugsweise mit Ausnahme der mobilen Energie-Quelle, über das systeminterne Energie-Netz miteinander in Verbindung stehen, wobei es sich bei den Energieübertragungseinrichtungen, welche das systeminterne Energie-Netz bilden, vorzugsweise um Stromkabel handelt.

3. System nach Anspruch 1, **dadurch gekennzeichnet, dass** es sich bei der SEA-ME und der SEC-ME um zwei verschiedene über eine Datenschnittstelle miteinander in Verbindung stehende Management-Einheiten oder um dieselbe Management-Einheit handelt und/oder es sich bei der SEA-ME und der SA-ME um zwei verschiedene über eine Datenschnittstelle miteinander in Verbindung stehende Management-Einheiten oder um dieselbe Management-Einheit handelt, wobei es bevorzugt ist, dass das System eine SEA-ME aufweist und es sich zumindest bei der SEA-ME und SA-ME um zwei oder mehrere verschiedene Management-Einheiten handelt.

4. System nach Anspruch 1, **dadurch gekennzeichnet, dass** es sich beim Gebäude, dem Gebäudekomplex oder der Gruppe von Gebäuden vorzugsweise um Wohngebäude und/oder Bürogebäude und/oder Produktionsstätten handelt.

5. System nach Anspruch 1, **dadurch gekennzeichnet, dass** es als weitere Komponente eine oder mehrere stationäre Energie-Quellen und/oder Energie-Speicher aufweist und/oder das systeminterne Energie-Netz mittels einer oder mehrerer Energieübertragungseinrichtungen mit einem externen Stromnetz verbunden ist, wobei es sich beim externen Stromnetz vorzugsweise um die öffentliche Stromversorgung handelt.

6. System nach Anspruch 1, **dadurch gekennzeichnet, dass** es sich bei einer oder mehreren der mobilen Energie-Quellen um Energie-Speicher, bevorzugt Batterien, handelt, wobei eine oder mehrere der Energie-Quellen vorzugsweise Teile von Fahrzeugen sind, insbesondere von Elektrofahrzeugen oder Hybridfahrzeugen.

7. Verfahren zur Optimierung der Energienutzung in einem lokalen System nach Anspruch 1 **dadurch gekennzeichnet, dass** mindestens
a) der Energieverbrauch der Energie-Verbraucher V₁-V_{B} (B ∈ IN; B ≥ 1) des Systems zu den Zeitpunkten T₁-T_{C} (C ∈ IN; C ≥ 1) oder einer Teilmenge davon gemessen wird, wobei die Messwerte für den Energieverbrauch direkt oder indirekt an eine Management-Einheit übermittelt werden, wobei auf der Grundlage der Messwerte für den Energieverbrauch eine Berechnung des Gesamtenergieverbrauchs G zu den Zeitpunkten T_{D}-T_{E} (D,E ∈ IN; 1≤D≤E≤C) durchgeführt wird, wobei es sich bei der Management-Einheit um die SEC-ME oder die SEA-ME handelt.
b) von einer Management-Einheit auf der Grundlage von zumindest dem Gesamtenergieverbrauch G zu den Zeitpunkten T_{D}-T_{E} oder einer Teilmengen davon eine Berechnung des voraussichtlichen Gesamtenergieverbrauchs Z zu den (zukünftigen) Zeitpunkten T_{G}-T_{H} (G,H ∈ IN; C≤G≤H) durchgeführt wird, wobei es sich bei der Management-Einheit vorzugsweise um die SEA-ME handelt,
c) die in den Energie-Quellen Q₁-Q_{K} (K ∈ IN; K ≥ 1) gespeicherten Energiemengen E₁-E_{K} (K ∈ IN; K ≥ 1) gemessen werden, und die Messwerte für E₁-E_{K} an die CA-ME übermittelt werden,
d) die Messwerte für E₁-E_{K} von der CA-ME direkt oder indirekt an die SEA-ME übermittelt werden,
e) die SEA-ME zumindest auf der Grundlage des Gesamtenergieverbrauchs Z und/oder des gegenwärtigen Gesamtenergieverbrauchs und der Messwerte für E₁-E_{K} eine Planung für eine optimierte Energie-Nutzung im System vornimmt,
f) die SEA-ME auf der Grundlage des Ergebnisses aus e) direkt oder indirekt den Energiefluss zwischen den mobilen Energie-Quellen, den Stationen und den Verbrauchern regelt.
g) die SA-ME und/oder eine oder mehrere CA-ME den Energiefluss zwischen mehreren Energie-Quellen regelt.

8. Verfahren nach Anspruch 7, **dadurch gekennzeichnet, dass** die Planung für eine optimierte Energie-Nutzung mindestens umfasst, dass die SEA-ME die Schritte ausführt ausgewählt aus der Gruppe:
- eine Berechnung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch E₁-E_{K} gedeckt werden kann,
- eine Berechnung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch E₁-E_{K} gedeckt werden kann und/oder wie viel Energie an Q₁-Q_{K} abgegeben werden kann, so dass: der nicht durch E₁-E_{K} gedeckte Anteil des voraussichtlichen Gesamtenergieverbrauchs Z zu den Zeitpunkten T_{G}-T_{H} und/oder die Summe aus der an die Q₁-Q_{K} abgegebenen Energie und dem voraussichtlichen Gesamtenergieverbrauchs Z zu den Zeitpunkten T_{G}-T_{H} geringere Schwankungen als der voraussichtlichen Gesamtenergieverbrauchs Z zu den Zeitpunkten T_{G}-T_{H} aufweist,
- einer Berechung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch eine oder mehrere an das systeminterne Energie-Netz angeschlossene stationäre Energie-Quellen gedeckt werden kann und/oder wie viel des Gesamtenergieverbrauchs Z durch E₁-E_{K} gedeckt werden kann und/oder wie viel Energie an Q₁-Q_{K} abgegeben werden kann, so dass: der Wert für den Gesamtenergieverbrauch Z zuzüglich der an Q₁-Q_{K} abgegebenen Energie und abzüglich des durch E₁-E_{K} gedeckten Anteils und abzüglich des durch die stationären Energie-Quellen gedeckten Anteils über die Zeitpunkte T_{G}-T_{H} geringere Schwankungen als der voraussichtliche Gesamtenergieverbrauch Z aufweist
- eine Berechnung vornimmt, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch eine oder mehrere stationäre Energie-Quellen gedeckt werden kann und/oder wie viel Energie an Q₁-Q_{K} abgegeben werden kann, so dass: der nicht durch die stationären Energie-Quellen gedeckte Anteil des voraussichtlichen Gesamtenergieverbrauchs Z zu den Zeitpunkten T_{G}-T_{H} und/oder die Summe aus der an die Q₁-Q_{K} abgegebenen Energie und dem voraussichtlichen Gesamtenergieverbrauchs Z zu den Zeitpunkten T_{G}-T_{H} geringere Schwankungen als der voraussichtlichen Gesamtenergieverbrauchs Z zu den Zeitpunkten T_{G}-T_{H} aufweist.

9. Verfahren nach Anspruch 7, **dadurch gekennzeichnet, dass** ermittelt wird, ob in der Nähe einer Station des Systems eine mobile Energie-Quelle vorhanden ist, und wenn dies zutrifft, eine Kommunikationsverbindung zwischen der CA-ME und der SA-ME oder der SEA-ME aufgebaut wird, wobei zumindest Daten zur eindeutigen Identifizierung der mobilen Energie-Quelle und/oder deren Besitzer und/oder deren Benutzer von der CA-ME an die SA-ME übertragen werden und eine Authentifizierung stattfindet, wobei nach erfolgreicher Authentifizierung die mobile Energie-Quelle mittels einer Energieübertragungseinrichtung an die Station angeschlossen wird, wobei es bevorzugt ist dass durch ein Broadcast-Signal ermittelt wird, ob eine mobile Energie-Quelle vorhanden ist.

10. Verfahren nach Anspruch 7, **dadurch gekennzeichnet, dass** der Energiefluss zwischen mobiler Energie-Quelle und Energie-Verbrauchern über einen Energie-Controller geregelt wird, welcher wiederum direkt oder indirekt von der SEA-ME gesteuert wird, wobei es bevorzugt ist, dass der Energiefluss von und zur mobilen Energie-Quelle von der CA-ME gesteuert wird, wobei die Steuerung des Energieflusses durch die CA-ME höhere Priorität besitzt als diejenige durch die SEA-ME.

11. Verfahren nach Anspruch 7, **dadurch gekennzeichnet, dass** die Berechnung des voraussichtlichen Gesamtenergieverbrauchs Z zu den (zukünftigen) Zeitpunkten T_{G}-T_{H} und/oder der optimierten Energie-Nutzung zu den (zukünftigen) Zeitpunkten T_{G}-T_{H} zusätzlich auf Basis mindestens eines der Kriterien, ausgewählt aus der folgenden Gruppe, geschieht:
- eine von einem Benutzer festgelegte geplante Nutzung von Energie-Verbrauchem zu den Zeitpunkten T_{G}-T_{H} oder einer Teilmenge davon, welche vom Benutzer über eine Benutzerschnittstelle eingegeben und direkt oder indirekt an die SEA-ME übermittelt wird,
- eine von einem Benutzer festgelegte, geplante Ladung und/oder Entladung von Energie-Quellen zu der Zeitpunkte T_{G}-T_{H} oder einer Teilmenge davon, welche vom Benutzer über eine Benutzerschnittstelle eingegeben und direkt oder indirekt an die SEA-ME übermittelt wird,
- eine von einem Benutzer festgelegte geplante eingeschränkte Verfügbarkeit der Energie-Quelle, welche vom Benutzer über eine Benutzerschnittstelle eingegeben und direkt oder indirekt an die SEA-ME übermittelt wird, wobei es bevorzugt ist, dass es sich dabei um die voraussichtlich auftretende, einzelfallbezogene oder regelmäßig wiederkehrende, zeitlich definierte Nichtverfügbarkeit der mobilen Energie-Quelle handelt,
- die von Messeinrichtungen gemessene Energiemenge, welche an eine oder mehrere Energie-Quellen zu den Zeitpunkten T₁-T_{C} oder einer Teilmenge davon zugeführt oder von diesen bezogen wurde, wobei der gemessene Energiemenge direkt oder indirekt an die SEA-ME und/oder CA-ME übermittelt wird,
- die von Messeinrichtungen zu den Zeitpunkten T₁-T_{C} oder einer Teilmenge davon gemessene Umweltbedingungen, wobei die Umweltbedingungen vorzugsweise aus der Gruppe Windstärke Temperatur Sonneneinstrahlung und Tageslänge gewählt sind,
- den voraussichtlichen Umweltbedingungen zu den Zeitpunkten T_{G}-T_{H}, wobei die Umweltbedingungen vorzugsweise aus der Gruppe Windstärke, Temperatur Sonneneinstrahlung Tageslänge Jahreszeit und Niederschlagsmenge gewählt sind
- dem voraussichtlichen Strompreis zu den Zeitpunkten T_{G}-T_{H} oder einer Teilmenge davon, und
- im Falle dass eine Übertragung von Energie aus dem systeminternen Energie-Netz an das externe Stromnetz vorgesehen ist, dem Energie-Bedarf des Betreibers des externen Stromnetzes zur Sicherstellung der Netzstabilität, wobei es sich dabei vorzugsweise um den Bedarf an Regelstrom handelt.

12. Verfahren nach Anspruch 7, **dadurch gekennzeichnet, dass** die Verfügbarkeit von Strom aus einem externen Stromnetz mittels einer oder mehrerer Messeinrichtungen überwacht wird und bei eingeschränkter Verfügbarkeit die SEA-ME direkt oder indirekt den Energiefluss von der mobilen Energie-Quelle über die Station zu den Energie-Verbrauchern regelt.

13. Verfahren nach Anspruch 7, **dadurch gekennzeichnet, dass** die SEA-ME mindestens eines der Ziele, ausgewählt aus der folgenden Gruppe, veranlasst:
Eine gezielte Leistungsdrosselung Leistungserhöhung eine gezielte Ab- und/oder Einschaltung von einzelnen Energie-Verbrauchern oder Gruppen von Energie-Verbrauchern eine gezielte Zu- oder Abschattung von weiteren stationären Energie-Quellen und stationären Energie-Speichern wobei es bevorzugt ist, dass die Impulse für diese Aktionen über eine externe Schnittstelle (bspw. zum Stromnetzbetreiber) in das System gelangen, und dass das System die tatsächlich auszuführenden Aktionen auf Basis der eingehenden Impulse, der systeminternen Anforderungen und vorher festgelegter Regeln und/oder der Vertragbeziehungen zwischen Nutzer und Netzbetreiber ermittelt.

## Claims

1. A system for smoothing the load curve, particularly for relieving the public power network, in the cade of energy consumption by local systems for the use of mobile energy sources, **characterised in that** the system is organised decentrally by using a multi-agent system and has at least the following components:
- one or a plurality of central management units (SEA-ME) and also one or a plurality of further management units, wherein each management unit has at least one processor unit, at least one storage unit and at least one communication apparatus and/or data interface,
- one or a plurality of energy controllers, wherein the energy controllers have means for regulating and/or switching electrical circuits, wherein each energy controller is connected via a data interface to at least one management unit (SEC-ME),
- one or a plurality of energy consumers V₁-V_{B} (B ε IN; B ≥ 1),
- one or a plurality of measuring apparatuses for measuring the energy consumption of the energy consumers,
- one or a plurality of mobile energy sources Q_{L}-Q_{K} (K ε IN; K ≥ 1), wherein a management unit (CA-ME) is assigned to each mobile energy source,
- measuring apparatuses for measuring the energy quantities E₁-E_{K} (K ε IN; K ≥ 1) stored in the mobile energy sources Q₁-Q_{K}, wherein the measuring apparatuses, which are assigned to one mobile energy source Q₁-Q_{K} in each case, are connected via data interfaces to the respective management unit (CA-ME),
- one or a plurality of fixed stations for connecting the mobile energy sources to a system-internal energy network, wherein one management unit (SA-ME) is assigned to each station or each group of stations,
- one or a plurality of energy transmission apparatuses, which together form a system-internal energy network, which is not to be assigned to the public energy network, wherein at least the energy consumers, the stations and the energy controllers are connected to one another via the system-internal energy network,
and **in that** the components of the system are arranged inside and/or next to and/or on a building, a building complex or a group of buildings,
- one SA-ME and/or one or a plurality of CA-MEs regulates the energy flow between a plurality of energy sources,
wherein SEA-ME, SEC-ME, SA-ME and CA-ME monitor situations, anticipate the behaviour of the system or the components thereof and the users thereof, carry out optimisations in the system process, detect faults, communicate accordingly and coordinate independently.

2. The system according to Claim 1, **characterised in that** a plurality or all of the components of the system, preferably with the exception of the mobile energy source, are connected to one another via the system-internal energy network, wherein the energy transmission apparatuses, which form the system-internal energy network, are preferably power cables.

3. The system according to Claim 1, **characterised in that** the SEA-ME and SEC-ME are two different management units which are connected to one another via a data interface or the same management unit and/or the SEA-ME and the SA-ME are two different management units which are connected to one another via a data interface or the same management unit, wherein it is preferred that the system has one SEA-ME and the SEA-ME and SA-ME at least are two or a plurality of different management units.

4. The system according to Claim 1, **characterised in that** the building, the building complex or the group of buildings are preferably residential buildings and/or office buildings and/or production facilities.

5. The system according to Claim 1, **characterised in that** it has one or a plurality of stationary energy sources and/or energy storage devices as a further component and/or the system-internal energy network is connected by means of one or a plurality of energy transmission apparatuses to an external power network, wherein the external power network is preferably the public power supply.

6. The system according to Claim 1, **characterised in that** one or a plurality of the mobile energy sources are energy storage devices, preferably batteries, wherein one or a plurality of the energy sources are preferably parts of vehicles, particularly of electric vehicles or hybrid vehicles.

7. A method for optimising the energy use in a local system according to Claim 1, **characterised in that** at least
a) the energy consumption of the energy consumers V₁-V_{B} (B ε IN; B ≥ 1) of the system is measured at the times T₁-T_{C} (C ε IN; C ≥ 1) or a portion thereof, wherein the measured values for the energy consumption are transmitted directly or indirectly to a management unit, wherein a calculation of the overall energy consumption G at the times T_{D}-T_{E} (D,E ε IN; 1≤D≤E≤C) is carried out on the basis of the measured values for the energy consumption, wherein the management unit is the SEC-ME or the SEA-ME.
b) a calculation of the expected overall energy consumption Z at the (future) times T_{G}-T_{H} (G,H ε IN; C≤G≤H) is carried out by a management unit on the basis of at least the overall energy consumption G at the times T_{D}-T_{E} or a portion thereof, wherein the management unit is preferably the SEA-ME,
c) the energy quantities E₁-E_{K} (K ε IN; K ≥ 1) stored in the energy sources Q₁-Q_{K} (K ε IN; K ≥ 1) are measured and the measured values for E₁-E_{K} are transmitted to the CA-ME,
d) the measured values for E₁-E_{K} are transmitted directly or indirectly from the CA-ME to the SEA-ME,
e) the SEA-ME undertakes planning for optimised energy use in the system at least on the basis of the overall energy consumption Z and/or the current overall energy consumption and the measured values for E₁-E_{K},
f) the SEA-ME regulates the energy flow between the mobile energy sources, the stations and the consumers directly or indirectly on the basis of the result from e),
g) the SA-ME and/or one or a plurality of CA-MEs regulates the energy flow between a plurality of energy sources.

8. The method according to Claim 7, **characterised in that** the planning for an optimised energy use at least comprises that the SEA-ME executes the steps selected from the group:
- undertakes a calculation in order to establish how much of the expected overall energy consumption Z at the times T_{G}-T_{H} and/or of the current overall energy consumption can be covered by E₁-E_{K},
- undertakes a calculation in order to establish how much of the expected overall energy consumption Z at the times T_{G}-T_{H} and/or of the current overall energy consumption can be covered by E₁-E_{K} and/or how much energy can be output to Q₁-Q_{K}, so that: the portion of the expected overall energy consumption Z at the times T_{G}-T_{H} not covered by E₁-E_{K} and/or the sum of the energy output to Q₁-Q_{K} and the expected overall energy consumption Z at the times T_{G}-T_{H} has lower fluctuations than the expected overall energy consumption Z at the times T_{G}-T_{H},
- undertakes a calculation in order to establish how much of the expected overall energy consumption Z at the times T_{G}-T_{H} and/or of the current overall energy consumption can be covered by one or a plurality of stationary energy sources connected to the system-internal energy network and/or how much of the overall energy consumption Z can be covered by E₁-E_{K} and/or how much energy can be output to Q₁-Q_{K}, so that: the value for the overall energy consumption Z plus the energy output to Q₁-Q_{K} and less the portion covered by E₁-E_{K} and less the portion covered by the stationary energy sources over the times T_{G}-T_{H} has lower fluctuations than the expected overall energy consumption Z,
- undertakes a calculation in order to establish how much of the expected overall energy consumption Z at the times T_{G}-T_{H} and/or of the current overall energy consumption can be covered by one or a plurality of stationary energy sources and/or how much energy can be output to Q₁-Q_{K}, so that: the portion of the expected overall energy consumption Z at the times T_{G}-T_{H} not covered by the stationary energy sources and/or the sum of the energy output to Q₁-Q_{K} and the expected overall energy consumption Z at the times T_{G-}T_{H} has lower fluctuations than the expected overall energy consumption Z at the times T_{G}-T_{H}.

9. The method according to Claim 7, **characterised in that** it is established whether a mobile energy source is present in the vicinity of the system, and if this is the case, a communication connection between the CA-ME and the SA-ME or the SEA-ME is set up, wherein at least data for the unique identification of the mobile energy source and/or the owner and/or the user thereof is transmitted from the CA-ME to the SA-ME and an authentication takes place, wherein after successful authentication, the mobile energy source is connected by means of an energy transmission apparatus to the station, wherein it is preferred that it is established by a broadcast signal whether a mobile energy source is present.

10. The method according to Claim 7, **characterised in that** the energy flow between mobile energy source and energy consumers is regulated via an energy controller, which is in turn controlled directly or indirectly by the SEA-ME, wherein it is preferred that the energy flow from and to the mobile energy source is controlled by the CA-ME, wherein the control of the energy flow by the CA-ME has a higher priority than that by the SEA-ME.

11. The method according to Claim 7, **characterised in that** the calculation of the expected overall energy consumption Z at the (future) times T_{G}-T_{H} and/or the optimised energy use at the (future) times T_{G}-T_{H} additionally takes place on the basis of at least one of the criteria selected from the following group:
- a planned use of energy consumers at the times T_{G}-T_{H} or a portion thereof determined by a user, which is entered by the user via a user interface and directly or indirectly transmitted to the SEA-ME,
- a planned charging and/or discharging of energy sources at the times T_{G}-T_{H} or a portion thereof determined by a user, which is entered by the user via a user interface and directly or indirectly transmitted to the SEA-ME,
- a planned limited availability of the energy source determined by the user, which is entered by the user via a user interface and transmitted directly or indirectly to the SEA-ME, wherein it is preferred that one is in this case concerned with temporally defined non-availability of the mobile energy source which is expected to occur, relates to isolated cases or recurs regularly,
- the energy quantity measured by measuring apparatuses, which is supplied to or drawn from one or a plurality of energy sources at the times T₁-T_{C} or a portion thereof, wherein the measured energy quantity is transmitted directly or indirectly to the SEA-ME and/or CA-ME,
- the environmental conditions measured by measuring apparatuses a the times T₁-T_{C} or a portion thereof, wherein the environmental conditions are preferably selected from the group of wind strength, temperature, solar irradiation and day length,
- the expected environmental conditions at the times TG-TH, wherein the environmental conditions are preferably chosen from the group of temperature, solar irradiation, day length, season and amount of precipitation,
- the expected power price at the times T_{G}-T_{H} or a portion thereof, and
- in the event that a transmission of energy from the system-internal energy network to the external power network is provided, the energy requirement of the operator of the external power network to ensure network stability, wherein this is preferably the requirement for control current.

12. The method according to Claim 7, **characterised in that** the availability of power from an external power network is monitored by means of one or a plurality of measuring apparatuses and in the case of limited availability, the SEA-ME directly or indirectly regulates the energy flow from the mobile energy source via the station to the energy consumers.

13. The method according to Claim 7, **characterised in that** the SEA-ME achieves at least one of the goals selected from the following group: A targeted power throttling, power increase, a targeted switching off and/or on of individual energy consumers or groups of energy consumers, a targeted activation or deactivation of further stationary energy sources and stationary energy storage devices, wherein it is preferred that the pulses for these actions make it into the system via an external interface (for example for power network operators), and that the system establishes the actual actions to be executed on the basis of the incoming pulses, the system-internal demands and previously determined rules and/or the contractual relationships between users and network operators.

## Revendications

1. Système pour lisser la courbe d'absorption de puissance, en particulier pour le délestage du réseau électrique public, lors de la consommation d'énergie de systèmes locaux pour l'utilisation de sources d'énergie mobiles, **caractérisé en ce que** le système est organisé de manière décentralisée grâce à l'utilisation d'un système multi-agents et présente au moins les composants suivants :
- une ou plusieurs unités de gestion centrales (SEA-ME) ainsi qu'une ou plusieurs autres unités de gestion, chaque unité de gestion présentant au moins une unité de processeur, au moins une unité de stockage et au moins un dispositif de communication et/ou une interface de données,
- un ou plusieurs contrôleurs d'énergie, les contrôleurs d'énergie présentant des moyens pour la régulation et/ou la commutation de circuits électriques, chaque contrôleur d'énergie étant en liaison par l'intermédiaire d'une interface de données avec au moins une unité de gestion (SEC-ME),
- un ou plusieurs consommateurs d'énergie V₁-V_{B}(B ε IN ; B ≥ 1),
- un ou plusieurs dispositifs de mesure pour mesurer la consommation d'énergie des consommateurs d'énergie,
- une ou plusieurs sources d'énergie mobiles Q₁-Q_{K} (K ε IN ; K ≥ 1), une unité de gestion (CA-ME) étant associée à chaque source d'énergie mobile,
- des dispositifs de mesure pour mesurer les quantités d'énergie E₁-E_{K} (K ε IN ; K ≥ 1) accumulées dans les sources d'énergie mobiles Q₁-Q_{K}, moyennant quoi les dispositifs de mesure, lesquels sont respectivement associés à une source d'énergie mobile Q₁-Q_{K}, sont en liaison par l'intermédiaire d'interfaces de données avec l'unité de gestion (CA-ME) respective,
- une ou plusieurs stations stationnaires pour le raccordement des sources d'énergie mobiles à un réseau d'énergie interne au système, une unité de gestion (SA-ME) étant associée à chaque station ou à chaque groupe de stations,
- un ou plusieurs dispositifs de transmission d'énergie, lesquels forment ensemble un réseau d'énergie interne au système lequel n'est pas associé au réseau d'énergie public, moyennant quoi au moins les consommateurs d'énergie, les stations et les contrôleurs d'énergie sont en liaison les uns avec les autres par l'intermédiaire du réseau d'énergie interne au système,
et **en ce que** les composants du système sont disposés à l'intérieur et/ou à côté et/ou sur un bâtiment, un ensemble de bâtiments ou un groupe de bâtiments,
- une SA-ME et/ou une ou plusieurs CA-ME régulant le flux d'énergie entre plusieurs sources d'énergie,
- des SEA-ME, SEC-ME, SA-ME et CA-ME surveillant des situations, anticipant le comportement du système ou de ses composants et de ses utilisateurs, réalisant des optimisations de la séquence du système, reconnaissant des erreurs, communiquant de manière correspondante et se coordonnant de façon autonome.

2. Système selon la revendication 1, **caractérisé en ce que** plusieurs composants du système ou l'ensemble de ceux-ci, de préférence à l'exception des sources d'énergie mobiles, sont en liaison les uns avec les autres par l'intermédiaire du réseau d'énergie interne au système, moyennant quoi, en ce qui concerne les dispositifs de transmission d'énergie, lesquels forment le réseau d'énergie interne au système, il s'agit de préférence de câbles électriques.

3. Système selon la revendication 1, **caractérisé en ce que**, en ce qui concerne la SEA-ME et la SEC-ME, il s'agit de deux unités de gestion différentes en liaison l'une avec l'autre par l'intermédiaire d'une interface de données ou bien de la même unité de gestion et/ou **en ce que**, concernant la SEA-ME et la SA-ME, il s'agit de deux unités de gestion différentes en liaison l'une avec l'autre par l'intermédiaire d'une interface de données ou de la même unité de gestion, moyennant quoi il est préféré que le système présente une SEA-ME et que, en ce qui concerne au moins la SEA-ME et la SA-ME, il s'agit de deux ou plusieurs unités de gestion différentes.

4. Système selon la revendication 1, **caractérisé en ce que**, en ce qui concerne les bâtiments, l'ensemble de bâtiments ou le groupe de bâtiments, il s'agit de préférence de bâtiments résidentiels et/ou de bâtiments de bureau et/ou de sites de production.

5. Système selon la revendication 1, **caractérisé en ce qu'**il présente, en guise d'autre composant, une ou plusieurs sources d'énergie stationnaires et/ou accumulateurs d'énergie et/ou **en ce que** le réseau d'énergie interne au système est en liaison à l'aide d'un ou plusieurs dispositifs de transmission d'énergie avec un réseau électrique externe, moyennant quoi en ce qui concerne le réseau électrique externe, il s'agit de préférence d'une alimentation électrique publique.

6. Système selon la revendication 1, **caractérisé en ce que**, en ce qui concerne une ou plusieurs des sources d'énergie mobiles, il s'agit d'accumulateurs d'énergie, de préférence de batteries, moyennant quoi une ou plusieurs des sources d'énergie sont de préférence des pièces de véhicules automobiles, en particulier de véhicules électriques ou de véhicules hybrides.

7. Procédé pour l'optimisation de l'utilisation d'énergie dans un système local selon la revendication 1, **caractérisé en ce que** au moins
a) la consommation d'énergie des consommateurs d'énergie V₁-V_{B}(B ε IN ; B ≥ 1) du système est mesurée aux instants T₁-T_{C} (C ε IN ; C ≥ 1) ou un sous-ensemble de ceux-ci, les valeurs de mesure pour la consommation d'énergie étant transmises directement ou indirectement à une unité de gestion, moyennant quoi sur la base des valeurs de mesure pour la consommation d'énergie, on effectue un calcul de la consommation d'énergie globale G aux instants T_{D}-T_{E} (D, E ε IN ; 1≤D≤E≤C), moyennant quoi en ce qui concerne l'unité de gestion, il s'agit de la SEC-ME ou de la SEA-ME,
b) une unité de gestion effectuant, sur la base au moins de la consommation d'énergie globale G aux instants T_{D}-T_{E} ou un sous-ensemble de ceux-ci, un calcul de la consommation d'énergie globale prévisible Z aux instants (futurs) T_{G}-T_{H} (G, H ε IN ; C≤G≤H≤C), moyennant quoi en ce qui concerne l'unité de gestion, il s'agit de préférence de la SEA-ME,
c) les quantités d'énergie E₁-E_{K} (K ε IN ; K ≥ 1) accumulées dans les sources d'énergie Q₁-Q_{K} (K ε IN ; K ≥ 1) étant mesurées, et les valeurs de mesure pour E₁-E_{K} étant transmises à la CA-ME,
d) les valeurs de mesure pour E₁-E_{K} étant transmises directement ou indirectement par la CA-ME à la SEA-ME,
e) la SEA-ME procédant, au moins sur la base de la consommation d'énergie globale Z et/ou de la consommation d'énergie globale actuelle et des valeurs de mesure pour E₁-E_{K}, à une planification pour une utilisation d'énergie optimisée dans le système,
f) sur la base du résultat en e), la SEA-ME régulant directement ou indirectement le flux d'énergie entre les sources d'énergie mobiles, les stations et les consommateurs,
g) la SA-ME et/ou une ou plusieurs CA-ME régulant le flux d'énergie entre plusieurs sources d'énergie.

8. Procédé selon la revendication 7, **caractérisé en ce que** la planification pour une utilisation d'énergie optimisée comprend au moins le fait que la SEA-ME exécute les étapes sélectionnées dans le groupe suivant :
- réalisation d'un calcul afin de déterminer quelle quantité de la consommation d'énergie globale prévisible Z aux instants T_{G}-T_{H} et/ou de la consommation d'énergie globale actuelle peut être couverte par E₁-E_{K},
- réalisation d'un calcul afin de déterminer quelle quantité de la consommation d'énergie globale prévisible Z aux instants T_{G}-T_{H} et/ou de la consommation d'énergie globale actuelle peut être couverte par E₁-E_{K} et/ou quelle quantité d'énergie peut être retransmise à Q₁-Q_{K}, de sorte que la part non couverte par E₁-E_{K} en consommation d'énergie globale prévisible Z aux instants T_{G}-T_{H} et/ou la somme formée par l'énergie retransmise à Q₁-Q_{K} et la consommation d'énergie globale prévisible Z aux instants T_{G}-T_{H} présente des variations plus faibles que la consommation d'énergie globale prévisible Z aux instants T_{G}-T_{H},
- réalisation d'un calcul afin de déterminer quelle quantité de la consommation d'énergie globale prévisible Z aux instants T_{G}-T_{H} et/ou de la consommation d'énergie globale actuelle peut être couverte par une ou plusieurs sources d'énergie stationnaires raccordées au réseau d'énergie interne au système et/ou quelle quantité de la consommation d'énergie globale Z peut être couverte par E₁-E_{K} et/ou quelle quantité d'énergie peut être retransmise à Q₁-Q_{K}, de sorte que la valeur de la consommation d'énergie globale Z majorée de l'énergie retransmise à Q₁-Q_{K} et minorée de la part couverte par E₁-E_{K} et minorée de la part couverte par les sources d'énergie stationnaires aux instants T_{G}-T_{H} présente des variations plus faibles que la consommation d'énergie globale prévisible Z,
- réalisation d'un calcul afin de déterminer quelle quantité de la consommation d'énergie globale prévisible Z aux instants T_{G}-T_{H} et/ou de la consommation d'énergie globale actuelle peut être couverte par une ou plusieurs sources d'énergie stationnaires et/ou quelle quantité d'énergie peut être retransmise à Q₁-Q_{K}, de sorte que la part non couverte par les sources d'énergie stationnaires en consommation d'énergie globale prévisible Z aux instants T_{G}-T_{H} et/ou la somme formée par l'énergie retransmise à Q₁-Q_{K} et la consommation d'énergie globale prévisible Z aux instants T_{G}-T_{H} présente des variations plus faibles que la consommation d'énergie globale prévisible Z aux instants T_{G}-T_{H}.

9. Procédé selon la revendication 7, **caractérisé en ce que** l'on détermine s'il y a une source d'énergie mobile à proximité d'une station du système, et lorsque cela est le cas, une liaison de communication entre la CA-ME et la SA-ME ou la SEA-ME étant établie, moyennant quoi au moins des données pour l'identification sans équivoque des sources d'énergie mobiles et/ou de leurs propriétaires et/ou de leurs utilisateurs sont retransmises par la CA-ME à la SA-ME et une authentification ayant lieu, moyennant quoi après le succès de l'authentification, la source d'énergie mobile est raccordée à la station à l'aide d'un dispositif de transmission d'énergie, moyennant quoi il est préféré que l'on détermine grâce à un signal radio si une source d'énergie mobile est présente.

10. Procédé selon la revendication 7, **caractérisé en ce que** le flux d'énergie entre source d'énergie mobile et consommateurs d'énergie est régulé par l'intermédiaire d'un contrôleur d'énergie, lequel est quant à lui directement ou indirectement commandé par la SEA-ME, moyennant quoi il est préféré que le flux d'énergie à partir de la source d'énergie mobile et vers celle-ci soit commandé par la CA-ME, moyennant quoi la commande du flux d'énergie par la CA-ME présente une priorité plus élevée que celle de la SEA-ME.

11. Procédé selon la revendication 7, **caractérisé en ce que** le calcul de la consommation d'énergie globale prévisible Z aux instants (futurs) T_{G}-T_{H} et/ou de l'utilisation d'énergie optimisée aux instants (futurs) T_{G}-T_{H} s'effectue en plus sur la base d'au moins l'un des critères sélectionné parmi le groupe suivant :
- une utilisation planifiée, fixée par un utilisateur, de consommateurs d'énergie aux instants T_{G}-T_{H} ou un sous-ensemble de ceux-ci, laquelle est saisie par l'utilisateur via une interface utilisateur et est retransmise directement ou indirectement à la SEA-ME,
- une charge et/ou décharge planifiée, fixée par un utilisateur, de sources d'énergie aux instants T_{G}-T_{H} ou un sous-ensemble de ceux-ci, laquelle est saisie par l'utilisateur via une interface utilisateur et est retransmise directement ou indirectement à la SEA-ME,
- une disponibilité limitée planifiée, fixée par utilisateur, de la source d'énergie, laquelle est saisie par un utilisateur via une interface utilisateur et est retransmise directement ou indirectement à la SEA-ME, moyennant quoi il est préféré que dans ce cas, il s'agit de l'indisponibilité définie dans le temps apparaissant de manière probable en fonction d'un cas individuel ou se reproduisant régulièrement, de la source d'énergie mobile,
- la quantité d'énergie mesurée par des dispositifs de mesure, laquelle a été amenée à une ou plusieurs sources d'énergie aux instants T₁-T_{C} ou un sous-ensemble de ceux-ci ou a été consommée par celles-ci, la quantité d'énergie mesurée étant retransmise directement ou indirectement à la SEA-ME et/ou la CA-ME,
- les conditions environnementales mesurées par les dispositifs de mesure aux instants T₁-T_{C} ou un sous-ensemble de ceux-ci, les conditions environnementales étant de préférence sélectionnées dans le groupe : force du vent, température, rayonnement solaire et durée du jour,
- les conditions environnementales prévisibles aux instants T_{G}-T_{H}, les conditions environnementales étant de préférence sélectionnées dans le groupe : force du vent, température, rayonnement solaire, durée du jour, époque de l'année et quantité de précipitations,
- le prix du courant prévisible aux instants T_{G}-T_{H} ou un sous-ensemble de ceux-ci, et
- dans le cas où une transmission d'énergie du réseau d'énergie interne au système vers le réseau électrique externe est prévue, le besoin en énergie du fournisseur du réseau électrique externe pour garantir la stabilité du réseau, moyennant quoi il s'agit dans ce cas de préférence du besoin en courant de réglage.

12. Procédé selon la revendication 7, **caractérisé en ce que** la disponibilité en courant provenant d'un réseau électrique externe est surveillée à l'aide d'un ou plusieurs dispositifs de mesure et **en ce que**, en cas de disponibilité limitée, la SEA-ME régule directement ou indirectement le flux d'énergie de la source d'énergie mobile via la station jusqu'aux consommateurs d'énergie.

13. Procédé selon la revendication 7, **caractérisé en ce que** la SEA-ME met en oeuvre au moins l'un des objectifs sélectionné parmi le groupe suivant :
une réduction d'énergie ciblée, augmentation d'énergie, une mise en marche et/ou arrêt ciblée de consommateurs d'énergie individuels ou de groupes de consommateurs d'énergie, une mise en circuit ou hors circuit ciblée d'autres sources d'énergie stationnaires et d'accumulateurs d'énergie stationnaires, moyennant quoi l'on préfère que les impulsions pour ces actions parviennent à l'intérieur du système via une interface externe (par ex. exploitant de réseau électrique) et que le système détermine les actions devant être effectivement réalisées sur la base des impulsions entrantes, des exigences internes au système et des règles préalablement définies et/ou des relations contractuelles entre utilisateur et exploitant du réseau.
